# EUROPEAN PATENT APPLICATION

(11) **EP 4 780 116 A1**
(43) Date of publication of application: **22.07.2026**
(21) Application number: 24867314.7
(22) Date of filing: 06.09.2024
(51) Int. Cl.: H04W 72/542, H04W 72/0446, H04W 72/044

(54) **DATA REPORTING METHOD, DATA RECEIVING METHOD, AND RELATED DEVICE**

(30) Priority: 19.09.2023 CN 202311218490
(71) Applicant: HUAWEI TECHNOLOGIES CO., LTD., Shenzhen 518129 (CN)
(72) Inventor: WU, Wenbin, Shenzhen, Guangdong 518129 (CN); CHEN, Lei, Shenzhen, Guangdong 518129 (CN); WANG, Zhonglong, Shenzhen, Guangdong 518129 (CN); XIE, Xinqian, Shenzhen, Guangdong 518129 (CN); YING, Jiangwei, Shenzhen, Guangdong 518129 (CN)
(74) Representative: Pfenning, Meinig & Partner mbB
(86) International application number: PCT/CN2024/117335
(87) International publication number: WO 2025/060902

(57) **Abstract**

This application provides a data reporting method, a data receiving method, and a related device, to reduce, in a communication sensing process, a data amount of data reported by a network device. In the method, a first device determines a type of sensing data that needs to be reported, where the sensing data is obtained by executing a sensing task; the first device determines, when the type of the sensing data is a first type, a parameter included in first information, where the first information is used for assisting in processing the sensing data; the first device determines the first information based on the parameter included in the first information; and the first device reports the first information and the sensing data to a core network element.

## Description

This application claims priority to Chinese Patent Application No. 202311218490.8, filed with the China National Intellectual Property Administration on September 19, 2023 and entitled "DATA REPORTING METHOD, DATA RECEIVING METHOD, AND RELATED DEVICE", which is incorporated herein by reference in its entirety.

### TECHNICAL FIELD

This application relates to the field of communication technologies, and in particular, to a data reporting method, a data receiving method, and a related device.

### BACKGROUND

Integrated sensing and communication is a key technology in a next generation wireless communication system, and aims to integrate two functions: wireless communication and sensing into a same system. To implement this integration, various propagation characteristics of a radio signal need to be used to sense a target, to obtain surrounding physical environment information, improve communication performance, and enhance user experience. The sensing may be positioning, detection, imaging, recognition, and the like. Specifically, in the integrated sensing and communication technology, a network device sends a sensing signal, and the sensing signal is received by the network device or another network device after being reflected by a target in an environment. The network device analyzes the sensing signal, to sense the target. For example, a distance between the target and the network device may be determined by analyzing a delay of the sensing signal relative to sending, and a speed of the target may be determined by analyzing a Doppler shift of the sensing signal relative to sending.

After receiving the sensing signal, the network device needs to process the sensing signal, and then the network device needs to report data based on a processing result. In a conventional technology, an excessively large data amount of data reported by a network device causes a large quantity of occupied bandwidth resources, which may finally affect a data reporting speed.

Therefore, in a communication sensing process, how to reduce a data amount of data reported by a network device is an urgent technical problem to be resolved.

### SUMMARY

This application provides a data reporting method, a data receiving method, and a related device, to reduce, in a communication sensing process, a data amount of data reported by a network device.

A first aspect of this application provides a data reporting method. The method is applied to a first device. The method is performed by the first device, the method is performed by a part of components (for example, a processor, a chip, or a chip system) in the first device, or the method may be implemented by a logical module or software that can implement all or a part of functions of the first device. In the first aspect and possible implementations thereof, an example in which the method is performed by the first device is used for description. In the method, the first device determines a type of sensing data that needs to be reported, where the sensing data is obtained by executing a sensing task. The first device determines, when the type of the sensing data is a first type, a parameter included in first information, where the first information is auxiliary information used for processing the sensing data. The first device determines the first information based on the parameter included in the first information. The first device reports the first information and the sensing data. Alternatively, in the method, the first device determines a type of sensing data that needs to be reported and a parameter included in first information, where the sensing data is obtained by executing a sensing task, and the first information is auxiliary information used for processing the sensing data. When the type of the sensing data is a first type, the first information includes a parameter corresponding to the first type. The first device determines the first information based on the parameter included in the first information. The first device reports the first information and the sensing data.

In this embodiment of this application, the first device determines the type of the sensing data, and when the type of the sensing data is the first type, determines the parameter included in the first information that adapts to the first type, where the first information is the auxiliary information used for processing the sensing data. In other words, in this embodiment of this application, auxiliary information required for each type of sensing data does not need to be reported, and only auxiliary information required for the first type of sensing data is reported. Therefore, in this embodiment of this application, a data amount of information that is reported by the first device and that is used for assisting in processing the sensing data can be reduced, thereby reducing a data amount of data reported by the first device, that is, a network device.

In a possible implementation of the first aspect, the first device determines the type of the sensing data based on a received first request message, where the first request message indicates to execute the sensing task.

Based on the foregoing technical solution, the first device determines the type of the sensing data based on the first request message, so that the type of the sensing data reported by the first device meets a requirement of a device that sends the first request message.

In a possible implementation of the first aspect, the type of the sensing data is carried in the first request message; or if the first request message carries a requirement of the sensing task, the first device may determine the type of the sensing data in the following manner: The first device determines the type of the sensing data based on the requirement of the sensing task and/or sensing capability information, where the sensing capability information includes at least one of sensing resolution, sensing precision, a sensing range, a sensing refresh rate, a false detection rate, and a miss detection rate.

Based on the foregoing technical solution, two manners of determining the type of the sensing data are provided. One manner is that a device that sends the first request message directly notifies, by using the first request message, the first device of the type of the sensing data that the device needs. In this interaction manner, the first device can directly determine the type of the sensing data that needs to be reported. The other manner is that a device that sends the first request message notifies, by using the first request message, the first device of the requirement of the sensing task, and then the first device determines the type of the sensing data based on the requirement, and therefore the type of the sensing data finally reported by the first device adapts to the requirement of the sensing task.

Optionally, a sensing function network element in a core network element receives a sensing task request message sent by an upper-layer network element, where the request message carries the requirement of the sensing task.

Optionally, the requirement of the sensing task is a quality of service (quality of service, QoS) requirement, and the QoS requirement includes at least one of sensing resolution, sensing precision, a sensing range, a sensing refresh rate, a false detection rate, a miss detection rate, and a sensing delay.

Optionally, the core network element determines, based on the sensing capability information and the requirement of the sensing task, devices that can participate in the sensing task.

In a possible implementation of the first aspect, the type of the sensing data is carried in the first request message, and before determining the type of the sensing data, the first device reports the sensing capability information to the core network element.

Based on the foregoing technical solution, the first device reports the sensing capability information of the first device, so that the device that receives the first request message may determine, based on a sensing capability of the first device, whether the first device can participate in a sensing task, and determine the type of the sensing data that needs to be reported by the first device.

In addition to determining, only after the first device determines that the type of the sensing data is the first type, the parameter included in the first information, the first device may further determine, when the first device does not determine the type of the sensing data, the parameter included in the first information.

Optionally, the first device receives an indication message, where the indication message indicates a parameter that needs to be included in the first information.

Optionally, the indication message is the first request message, that is, the first request message further indicates a parameter that needs to be included in the first information.

In addition to determining, by the first device when the type of the sensing data is the first type, the parameter included in the first information and determining, only after the first device determines that the type of the sensing data is the first type, the parameter included in the first information, the first device may further determine, when the first device does not determine the type of the sensing data, the parameter included in the first information. The first device may first determine the parameter included in the first information, and then determine the type of the sensing data; or may first determine the type of the sensing data, and then determine the parameter included in the first information; or may determine the parameter included in the first information and the type of the sensing data at the same time. This is not limited in this application. For example, after determining the type of the sensing data, the first device may determine, based on the type of the sensing data, the parameter included in the first information. For another example, the first device may determine, in another manner, the parameter included in the first information.

Optionally, the first device receives an indication message, where the indication message indicates a parameter that needs to be included in the first information.

Optionally, the indication message is the first request message, that is, the first request message further indicates a parameter that needs to be included in the first information.

Based on the foregoing solution, the first device may directly obtain, based on the first request message or the indication message, the parameter that needs to be included in the first information, and the first device does not need to determine the parameter included in the first information only after determining that the type of the sensing data is the first type.

Optionally, when the first type is a baseband signal, the first information includes at least one of the following parameters: configuration information of a sensing resource, slot information, frame information, timestamp information, and a beam direction.

Optionally, when the first type is a baseband signal, the first information does not include indication information of a target object.

In a possible implementation of the first aspect, when the first type is data used to describe a signal feature, the first device determines that the first information includes at least one of the following parameters: slot information, frame information, timestamp information, and a beam direction.

Based on the foregoing technical solution, when the first type is the data used to describe the feature of the sensing signal, the slot information, the frame information, or the beam direction can be reported to assist in processing the sensing data, and the timestamp information can be reported to assist in integrating the sensing data and other sensing data. After receiving the sensing signal, the first device first demodulates the sensing signal to obtain the baseband signal, and then performs signal processing on the baseband signal to obtain the data used to describe the signal feature. The first device may perform signal processing on the baseband signal in the following manner.

Optionally, when the first type is data used to describe a signal feature, the first information includes at least one of the following parameters: slot information, frame information, timestamp information, and a beam direction.

Optionally, when the first type is data used to describe a signal feature, the first information does not include configuration information of a sensing resource and indication information of a target object.

Optionally, the first device performs channel estimation on the baseband signal to obtain channel state information (channel state information, CSI), and reports the CSI information as the sensing data to the core network element.

Optionally, the first device performs Fourier transform on the CSI information to obtain a delay spectrum, a distance spectrum, a velocity spectrum, or an angle spectrum of the sensing signal, and reports the data as the sensing data to the core network element. The data is used by a core network to determine a two-dimensional representation of the sensing signal, so that the core network element performs further target detection.

Optionally, the first device calculates reference signal received power, reference signal received quality, a signal-to-noise ratio, and the like of the baseband signal, and reports the data as the sensing data to the core network element.

In a possible implementation of the first aspect, when the first type is data used to describe a feature of a target object, the first device determines that the first information includes at least one of the following parameters: indication information of the target object and timestamp information, where the target object is a sensed object of the sensing task.

Based on the foregoing technical solution, when the first type is the data used to describe the feature of the target object, reporting the indication information of the target object may help determine whether a sensed object of the first device and a sensed object of another device are a same object. Therefore, when the sensed object of the first device and the sensed object of the another device are the same object, the sensing data and sensing data whose sensed object is the same object are integrated, and the sensing data and other sensing data can be assisted to be integrated by reporting the timestamp information.

Optionally, when the first type is data used to describe a feature of a target object, the first information includes at least one of the following parameters: indication information of the target object and timestamp information.

Optionally, when the first type is data used to describe a feature of a target object, the first information does not include configuration information of a sensing resource, slot information, frame information, and a beam direction.

Optionally, the indication information of the target object is an identifier (identifier, id) of the target object.

Optionally, when the first device is user equipment, first information reported by the user equipment to the core network element further includes location information of the user equipment or an absolute coordinate system of a sensing area of the user equipment.

In a possible implementation of the first aspect, before reporting the first information and the sensing data, the first device receives a first constraint sent by the core network element, where the first constraint is used to constrain a quantity of target objects included in the sensing data.

Based on the foregoing technical solution, the first constraint is sent to the first device, to control the quantity of target objects included in the sensing data finally reported by the first device, so that a data amount of the sensing data reported by the first device can be controlled.

Optionally, when the first device obtains the sensing data according to a target detection algorithm, the first constraint is a threshold of the target detection algorithm or a threshold of a threshold detection algorithm. After receiving the threshold, the first device can determine, based on the threshold, objects that are valid objects, that is, target objects, to report the target objects.

Optionally, the threshold may be a confidence threshold or an intersection over union (intersection over union, IoU) threshold of the target detection algorithm.

Optionally, when the first device obtains the sensing data by estimating a parameter of a sensed object, the first constraint is a mean square error of an estimated amount of the parameter, and the parameter includes a distance, a speed, an angle, or a location.

Optionally, the first request message may further indicate the first device to establish a sensing resource configuration related to the sensing task. The core network element may alternatively indicate, by sending another request message, the first device to establish a sensing resource configuration related to the sensing task. Correspondingly, the first device performs the sensing resource configuration, and after completing establishment of the sensing resource configuration, sends an indication message to the core network element, to indicate that the sensing resource configuration has been completed.

Optionally, when the type of the sensing data reported by the first device is the baseband signal, the first device needs to report the configuration information of the sensing resource. The configuration information of the sensing resource is carried in the indication message. If the indication message does not carry the configuration information of the sensing resource, the core network element sends a request message to the first device, to request the first device to send the configuration information of the sensing resource.

Optionally, the configuration information of the sensing resource includes a time-frequency domain resource configuration of the sensing signal or a sequence format used in the sensing signal.

Optionally, a device that reports the configuration information of the sensing resource may be a first device that sends the sensing signal, or may be a device that receives the sensing signal. When the device is the first device that sends the sensing signal, the configuration information may be carried in the foregoing indication message. When the device is the first device that receives the sensing signal, the device that sends the sensing signal sends the configuration information of the sensing resource to the device that receives the sensing signal, so that the device that receives the sensing signal may demodulate the sensing signal based on the configuration information, and report the configuration information of the sensing resource to the core network element.

Optionally, when the first device is a base station, the core network element sends the first request message, where the request message indicates the first device to establish a sensing resource configuration related to the sensing task. The base station receives the first request message, performs the sensing resource configuration, and generates and sends the sensing signal. When the first device is user equipment, because the user equipment cannot directly perform the sensing resource configuration, the core network element needs to first send the first request message to a base station around the user equipment. After receiving the first request message, the base station performs the sensing resource configuration, and sends indication information of a sensing resource that can be used to the user equipment. After receiving the indication information, the user equipment selects the sensing resource from the sensing resource, and generates and sends the sensing signal.

A second aspect of this application provides a data receiving method. The method is applied to a core network element. The method is performed by the core network element, the method is performed by a part of components (for example, a processor, a chip, or a chip system) in the core network element, or the method may be implemented by a logical module or software that can implement all or a part of functions of the core network element. In the second aspect and possible implementations thereof, an example in which the method is performed by the core network element is used for description. In the method, the core network element receives first information and sensing data, where the sensing data is obtained by executing a sensing task, and the first information is auxiliary information used for processing the sensing data; the core network element determines, when a type of the sensing data is a first type, a parameter included in the first information; and the core network element processes the sensing data based on the first information.

In this embodiment of this application, when the type of the sensing data reported by the first device is the first type, the core network element determines the parameter included in the first information, where the first information is the auxiliary information used for processing the sensing data. In other words, in this embodiment of this application, a core network does not need to enable a network device to report auxiliary information required for each type of sensing data, but only enables the network device to report auxiliary information required for the first type of sensing data. Therefore, in this embodiment of this application, a data amount of information that is reported by the network device and that is used for assisting in processing the sensing data can be reduced, thereby reducing a data amount of data reported by the network device.

In a possible implementation of the second aspect, the core network element sends a first request message, where the first request message indicates to execute the sensing task.

Based on the foregoing technical solution, the core network element sends the first request message to the first device. Correspondingly, the first device determines, based on the message, the type of the sensing data that needs to be reported, so that the type of the sensing data finally reported by the first device meets a requirement of the core network element.

In a possible implementation of the second aspect, the core network element receives sensing capability information, where the sensing capability information includes at least one of sensing resolution, sensing precision, a sensing range, a sensing refresh rate, a false detection rate, and a miss detection rate; and the core network element determines the type of the sensing data based on the sensing capability information and/or a requirement of the sensing task.

Based on the foregoing technical solution, the first device reports a sensing capability of the first device to the core network element, so that the core network element determines, based on the sensing capability, a type of a sensing service that meets the sensing capability of the first device, and sends the type of the sensing task to the first device. Therefore, the type of the sensing data finally reported by the first device adapts to the sensing capability of the first device. A technical effect of the foregoing solution is that the core network element determines the type of the sensing data, and the first device does not need to determine the type of the sensing data, and therefore time and resources consumed by the first device can be saved.

Optionally, the core network element determines, based on the requirement of the sensing task and/or the sensing capability information, the type of the sensing data that needs to be reported by the first device. When the type of the sensing data is the first type, the core network element determines the auxiliary information required for processing the type of the sensing data, to determine the parameter included in the first information, and sends an indication message to the first device, where the message indicates the parameter that needs to be included in the first information.

Optionally, the core network element receives the sensing data reported by the first device, and the core network element determines the auxiliary information required for processing the sensing data, to determine the parameter included in the first information, and sends an indication message to the first device, where the message indicates the parameter that needs to be included in the first information.

Optionally, the indication message sent by the core network element is the first request message.

In a possible implementation of the second aspect, the first request message carries the requirement of the sensing task.

Based on the foregoing technical solution, the core network element sends the requirement of the sensing task to the first device, so that the first device determines, based on the requirement of the sensing task, a type of a sensing service that meets the requirement of the sensing task, and the type of the sensing data finally reported by the first device adapts to the requirement of the sensing task. A technical effect of the foregoing solution is that the first device determines the type of the sensing data, and the core network element does not need to determine the type of the sensing data, and therefore time and resources consumed by the core network element can be saved.

In a possible implementation of the second aspect, when the first type is a baseband signal, the core network element determines that the first information includes at least one of the following parameters: configuration information of a sensing resource, slot information, frame information, timestamp information, and a beam direction.

Optionally, when the first type is a baseband signal, the first information includes at least one of the following parameters: configuration information of a sensing resource, slot information, frame information, timestamp information, and a beam direction.

Optionally, when the first type is a baseband signal, the first information does not include indication information of a target object.

Based on the foregoing technical solution, when the type of the sensing data reported by the first device is the baseband signal, the core network element may be assisted in demodulating the sensing data by reporting the configuration information of the sensing resource, the slot information, the frame information, or the beam direction, and the core network element may be assisted in integrating the sensing data and other sensing data by reporting the timestamp information.

In a possible implementation of the second aspect, when the first type is data used to describe a signal feature, the core network element determines that the first information includes at least one of the following parameters: slot information, frame information, timestamp information, and a beam direction.

Based on the foregoing technical solution, when the first type is the data used to describe the feature of the sensing signal, the core network element can be assisted in processing the sensing data by reporting the slot information, the frame information, or the beam direction by the first device, and the core network element can be assisted in integrating the sensing data and other sensing data by reporting the timestamp information.

Optionally, when the first type is data used to describe a signal feature, the first information includes at least one of the following parameters: slot information, frame information, timestamp information, and a beam direction.

Optionally, when the first type is data used to describe a signal feature, the first information does not include configuration information of a sensing resource and indication information of a target object.

In a possible implementation of the second aspect, when the first type is data used to describe a feature of a target object, the core network element determines that the first information includes at least one of the following parameters: indication information of the target object and timestamp information, where the target object is a sensed object of the sensing task.

Based on the foregoing technical solution, when the first type is the data used to describe the feature of the target object, reporting the indication information of the target object may help the core network element determine whether a sensed object of the first device and a sensed object of another device are a same object. Therefore, when the sensed object of the first device and the sensed object of the another device are the same object, the sensing data and sensing data whose sensed object is the same object are integrated, and the core network element can be assisted in integrating the sensing data and other sensing data by reporting the timestamp information.

Optionally, when the first type is data used to describe a feature of a target object, the first information includes at least one of the following parameters: indication information of the target object and timestamp information.

Optionally, when the first type is data used to describe a feature of a target object, the first information does not include configuration information of a sensing resource, slot information, frame information, and a beam direction.

In a possible implementation of the second aspect, the core network element sends a first constraint, where the first constraint is used to constrain a quantity of target objects included in the sensing data.

Based on the foregoing technical solution, the core network element sends the first constraint to the first device, to notify the first device of a requirement of the core network element on the quantity of target objects, so that the first device can report, based on the requirement on the quantity of target objects, sensing data that meets the requirement. Further, the core network element sends the first constraint to control the quantity of target objects included in the sensing data reported by the first device, so that a data amount of the sensing data reported by the first device can be controlled.

In a possible implementation of the second aspect, the core network element adjusts the first constraint based on the quantity of the target objects included in the sensing data, to obtain a second constraint; and the core network element sends the second constraint.

Based on the foregoing technical solution, the core network element adjusts the first constraint based on the quantity of objects included in the sensing data reported by the first device. The first constraint is used to constrain the quantity of target objects included in the sensing data. Therefore, the quantity of target objects reported by the first device is continuously adjusted based on the sensing data reported by the first device.

Optionally, the core network element may process the sensing data in the following manner: If the first type is the configuration information of the sensing resource, the slot information of the sensing signal, or the frame information or the beam direction of the sensing signal, the core network element demodulates the sensing data based on the first information; or if the first type is the timestamp information, the core network element determines, based on the first information, a moment at which the first device performs sensing, and integrates the sensing data and other sensing data based on the first information; or if the first type is the indication information of the target object, the core network element determines, based on the indication information of the target object, whether the sensing data and an object described by other sensing data are a same object. If the sensing data and the object described by the other sensing data are the same object, the core network element integrates the sensing data and the other sensing data.

A third aspect of this application provides a communication apparatus. The communication apparatus may implement the method in any one of the first aspect or the possible implementations of the first aspect. The communication apparatus includes a corresponding unit or module for performing the foregoing method. The unit or module included in the communication apparatus may be implemented by using software and/or hardware. For example, the apparatus may be a first device, or the apparatus may be a component (for example, a processor, a chip, or a chip system) in a first device, or the apparatus may be a logical module or software that can implement all or a part of functions of a first device.

The communication apparatus includes a transceiver unit and a processing unit. The processing unit is configured to: determine a type of sensing data that needs to be reported, where the sensing data is obtained by executing a sensing task; determine, when the type of the sensing data is a first type, a parameter included in first information, where the first information is auxiliary information used for processing the sensing data; and determine the first information based on the parameter included in the first information; and the transceiver unit is configured to report the first information and the sensing data.

In a possible implementation of the third aspect, the processing unit is specifically configured to determine the type of the sensing data based on a first request message received by the transceiver unit, where the first request message indicates to execute the sensing task.

In a possible implementation of the third aspect, the type of the sensing data is carried in the first request message; or the first request message carries a requirement of the sensing task, and the processing unit is specifically configured to determine the type of the sensing data based on the requirement of the sensing task and/or sensing capability information, where the sensing capability information includes at least one of sensing resolution, sensing precision, a sensing range, a sensing refresh rate, a false detection rate, and a miss detection rate.

In a possible implementation of the third aspect, the type of the sensing data is carried in the first request message, and the transceiver unit is further configured to report the sensing capability information.

In a possible implementation of the third aspect, the processing unit is specifically configured to: when the first type is a baseband signal, determine that the first information includes at least one of the following parameters: configuration information of a sensing resource, slot information, frame information, timestamp information, and a beam direction.

In a possible implementation of the third aspect, the processing unit is specifically configured to: when the first type is data used to describe a signal feature, determine that the first information includes at least one of the following parameters: slot information, frame information, timestamp information, and a beam direction.

In a possible implementation of the third aspect, the processing unit is specifically configured to: when the first type is data used to describe a feature of a target object, determine that the first information includes at least one of the following parameters: indication information of the target object and timestamp information, where the target object is a sensed object of the sensing task.

In a possible implementation of the third aspect, the transceiver unit is further configured to receive a first constraint, where the first constraint is used to constrain a quantity of target objects included in the sensing data.

A fourth aspect of this application provides a communication apparatus. The communication apparatus may implement the method in any one of the second aspect or the possible implementations of the second aspect. The communication apparatus includes a corresponding unit or module for performing the foregoing method. The unit or module included in the communication apparatus may be implemented by using software and/or hardware. For example, the apparatus may be a core network element, or the apparatus may be a component (for example, a processor, a chip, or a chip system) in a core network element, or the apparatus may be a logical module or software that can implement all or a part of functions of a core network element.

The communication apparatus includes a transceiver unit and a processing unit. The transceiver unit is configured to receive first information and sensing data, where the sensing data is obtained by executing a sensing task, and the first information is auxiliary information used for processing the sensing data; and the processing unit is configured to: determine, when a type of the sensing data is a first type, a parameter included in the first information; and process the sensing data based on the first information.

In a possible implementation of the fourth aspect, the transceiver unit is further configured to send a first request message, where the first request message indicates to execute the sensing task.

In a possible implementation of the fourth aspect, the transceiver unit is further configured to receive sensing capability information, where the sensing capability information includes at least one of sensing resolution, sensing precision, a sensing range, a sensing refresh rate, a false detection rate, and a miss detection rate; and the processing unit is invoked to determine the type of the sensing data based on the sensing capability information and/or a requirement of the sensing task.

In a possible implementation of the fourth aspect, the first request message carries the requirement of the sensing task.

In a possible implementation of the fourth aspect, the processing unit is specifically configured to: when the first type is a baseband signal, determine that the first information includes at least one of the following parameters: configuration information of a sensing resource, slot information, frame information, timestamp information, and a beam direction.

In a possible implementation of the fourth aspect, the processing unit is specifically configured to: when the first type is data used to describe a signal feature, determine that the first information includes at least one of the following parameters: slot information, frame information, timestamp information, and a beam direction.

In a possible implementation of the fourth aspect, the processing unit is specifically configured to: when the first type is data used to describe a feature of a target object, determine that the first information includes at least one of the following parameters: indication information of the target object and timestamp information, where the target object is a sensed object of the sensing task.

In a possible implementation of the fourth aspect, the transceiver unit is further configured to send a first constraint, where the first constraint is used to constrain a quantity of target objects included in the sensing data.

In a possible implementation of the fourth aspect, the processing unit is invoked to adjust the first constraint based on the quantity of the target objects included in the sensing data, to obtain a second constraint; and send the second constraint.

A fifth aspect of this application provides a communication apparatus, including at least one processor. The processor is configured to perform the method in any one of the first aspect or the possible implementations of the first aspect.

Optionally, the at least one processor is coupled to a memory. For example, the memory is configured to store a program or instructions. The at least one processor is configured to execute the program or the instructions, to enable the apparatus to implement the method in any one of the first aspect or the possible implementations of the first aspect.

A sixth aspect of this application provides a communication apparatus, including at least one processor. The processor is configured to perform the method in any one of the second aspect or the possible implementations of the second aspect.

Optionally, the at least one processor is coupled to a memory. For example, the memory is configured to store a program or instructions. The at least one processor is configured to execute the program or the instructions, to enable the apparatus to implement the method in any one of the second aspect or the possible implementations of the second aspect.

A seventh aspect of this application provides a communication apparatus, including at least one logic circuit and an input/output interface. The logic circuit is configured to perform the method in any one of the first aspect or the possible implementations of the first aspect.

An eighth aspect of this application provides a communication apparatus, including at least one logic circuit and an input/output interface. The logic circuit is configured to perform the method in any one of the second aspect or the possible implementations of the second aspect.

A ninth aspect of this application provides a computer-readable storage medium. The computer-readable storage medium is configured to store one or more computer-executable instructions. When the computer-executable instructions are executed by a processor, the processor performs the method in any one of the possible implementations of either of the first aspect and the second aspect.

A tenth aspect of this application provides a computer program product (also referred to as a computer program). When the computer program product is executed by a processor, the processor performs the method in any one of the possible implementations of either of the first aspect and the second aspect.

An eleventh aspect of this application provides a chip system. The chip system includes at least one processor, configured to support a communication apparatus in implementing a function in any one of the possible implementations of either of the first aspect and the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A twelfth aspect of this application provides a communication system. The communication system includes the communication apparatus in the third aspect and the call apparatus in the fourth aspect, or the communication system includes the communication apparatus in the fifth aspect and the communication apparatus in the sixth aspect, or the communication system includes the communication apparatus in the seventh aspect and the communication apparatus in the eighth aspect.

For technical effects of any design in the third aspect to the twelfth aspect, refer to the technical effects of the first aspect, the second aspect, and different designs of the first aspect and the second aspect. Details are not described herein again.

### BRIEF DESCRIPTION OF DRAWINGS

FIG. 1 is a diagram of a communication system according to this application;
FIG. 2 is a diagram of a data reporting method according to this application;
FIG. 3 is a diagram in which a first device receives and sends a sensing signal according to this application;
FIG. 4 is a diagram of a relationship between different types of sensing data according to this application;
FIG. 5 is a diagram of Embodiment 1a;
FIG. 6 is a diagram of Embodiment 1b;
FIG. 7 is a diagram of Embodiment 2;
FIG. 8 is a diagram of Embodiment 3;
FIG. 9 is a diagram of a communication apparatus according to this application;
FIG. 10 is another diagram of a communication apparatus according to this application; and
FIG. 11 is another diagram of a communication apparatus according to this application.

### DESCRIPTION OF EMBODIMENTS

To make the objectives, technical solutions, and advantages of this application clearer, the following further describes the implementations of this application in detail with reference to the accompanying drawings.

The following describes some terms in embodiments of this application.

1. A terminal device in this application includes a device that provides voice for a user, a device that provides data connectivity for a user, and a device that provides voice and data connectivity for a user. For example, the terminal device may be a handheld device having a wireless connection function or a processing device connected to a wireless modem. The terminal device may also be referred to as a terminal. The terminal may communicate with a core network through a radio access network (radio access network, RAN), and exchange voice or data with the RAN, or exchange voice and data with the RAN. The terminal may include user equipment (user equipment, user terminal), a wireless terminal, a mobile terminal, a device-to-device (device-to-device, D2D) communication terminal, a vehicle-to-everything (vehicle-to-everything, V2X) terminal, a roadside unit (roadside unit, RSU), a machine-to-machine/machine type communication (machine-to-machine/machine type communication, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal may include a mobile phone (or referred to as a "cellular" phone), a computer with a mobile terminal, a portable, pocket-sized, handheld, or computer built-in mobile apparatus, or the like. The terminal may include a personal communication service (personal communication service, PCS) phone, a cordless telephone set, a session initiation protocol (session initiation protocol, SIP) phone, a wireless local loop (wireless local loop, WLL) station, a personal digital assistant (personal digital assistant, PDA), or the like. The terminal further includes a limited device, for example, a device with low power consumption, a device with a limited storage capability, or a device with a limited computing capability. For example, the terminal includes an information sensing device, for example, a barcode, radio frequency identification (radio frequency identification, RFID), a sensor, a global positioning system (global positioning system, GPS), or a laser scanner.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the terminals described above are located in a vehicle, for example, placed in the vehicle or installed in the vehicle, all of the terminals may be considered as vehicle-mounted terminals. For example, the vehicle-mounted terminal is also referred to as an on-board unit (on-board unit, OBU).

In embodiments of this application, an apparatus for implementing a function of a terminal may be a terminal, or may be a circuit that can support a terminal in implementing the function, for example, a circuit that can be used in a chip system. The chip system may be installed in the terminal. In embodiments of this application, the chip system may include a chip, or may include a chip and another discrete component. In the technical solutions provided in embodiments of this application, an example in which the apparatus configured to implement the function of the terminal is a terminal is used for describing the technical solutions provided in embodiments of this application.

2. A network device in this application may be any device having a wireless transceiver function, or a chip disposed in a device having a wireless transceiver function. The network device may also be referred to as a network apparatus or a RAN device. The network device includes but is not limited to: a base station (base station), an evolved base station (evolved NodeB, eNodeB), a transmission reception point (transmission reception point, TRP), a next generation base station (next generation NodeB, gNB) in a fifth generation (5th generation, 5G) mobile communication system, a next generation base station in a sixth generation (6th generation, 6G) mobile communication system, a base station in a future mobile communication system, a wireless fidelity (wireless fidelity, Wi-Fi) system, a long-distance radio (long range radio, LoRa) system, or an access node in an internet of vehicles system. The RAN device may alternatively be a module or unit that completes a part of functions of the base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to a 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may also have different names, but a person skilled in the art may understand meanings of the names. For example, in an ORAN system, a CU may also be referred to as an O-CU (open CU), a DU may also be referred to as an O-DU, and an RU may also be referred to as an O-RU. Any unit in the CU (or the CU-CP or the CU-UP), the DU, and the RU in this application may be implemented by using a software module, a hardware module, or a combination of the software module and the hardware module. The radio access network device may be a macro base station, may be a micro base station or an indoor base station, or may be a relay node, a donor node, or the like. The network device in embodiments of this application may be any one of the foregoing devices or an apparatus in the foregoing devices, and a specific technology and a specific device form that are used by the network device are not limited in embodiments of this application. For ease of description, the network device is used as an abbreviation of the radio access network device, and the base station is used as an example of the radio access network device.

The network device can send configuration information (for example, carried in a scheduling message and/or an indication message) to the terminal device. The terminal device further performs network configuration based on the configuration information, so that the network configurations of the network device and the terminal device are aligned. Alternatively, through a network configuration preset in the network device and a network configuration preset in the terminal device, the network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an AMF, a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

3. The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are intended to distinguish between a plurality of objects, but not to limit an order, a time sequence, priorities, or importance of the plurality of objects.

The following describes a system architecture in embodiments of this application by using an example.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active (active) state, or may be applied to a terminal device in a non-connected (inactive) state or an idle (idle) state.

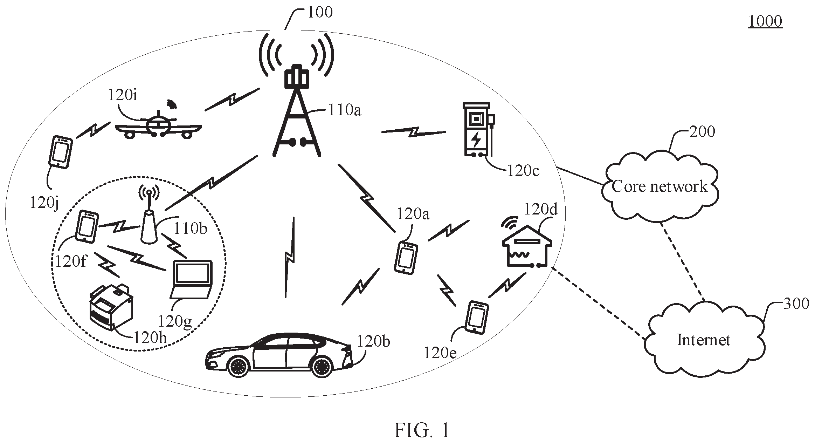

FIG. 1 is a diagram of a possible and non-limiting application scenario according to this application. The solutions provided in this application may be applied to a communication system 1000 shown in FIG. 1.

As shown in FIG. 1, the communication system includes a radio access network 100 and a core network 200. Optionally, the communication system 1000 may further include an internet 300. The radio access network 100 may include at least one radio access network device (which may also be understood as a network device described above, for example, 110a and 110b in FIG. 1), and may further include at least one terminal (which may also be understood as a terminal device described above, for example, 120a to 120j in FIG. 1). In addition, the radio access network device may be a macro base station (for example, 110a in FIG. 1), or may be a micro base station or an indoor base station (for example, 110b in FIG. 1), or may be a relay node, a donor node, or the like. It may be understood that all or a part of functions of the radio access network device in this application may also be implemented by using a software function running on hardware, or may be implemented by using an instantiated virtualization function on a platform (for example, a cloud platform). A specific technology and a specific device form that are used by the radio access network device are not limited in embodiments of this application.

For ease of description, an example in which a base station serves as the radio access network device and the terminal device is denoted as a terminal is used for description. It can be understood that, when the communication system includes an integrated access and backhaul (integrated access and backhaul, IAB) network, the base station may be an IAB node.

This application, the base station and the terminal may be at fixed locations, or may be movable. The base station and the terminal may be deployed on land, including an indoor or outdoor scenario and a handheld or vehicle-mounted scenario, or may be deployed on water, or may be deployed on an airplane, a balloon, or an artificial satellite in the air. Application scenarios of the base station and the terminal are not limited in embodiments of this application.

Roles of the base station and the terminal may be relative roles. For example, a helicopter or an uncrewed aerial vehicle 120i in FIG. 1 may be configured as a mobile base station. For a terminal 120j accessing the radio access network 100 through 120i, the terminal 120i is a base station. However, for a base station 110a, 120i is a terminal. To be specific, 110a and 120i communicate with each other through a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of the base station, and 120a to 120j each in FIG. 1 may be referred to as a communication apparatus having a function of the terminal.

Communication between the base station and the terminal, between base stations, or between terminals may be performed on a licensed spectrum, or may be performed on an unlicensed spectrum, or may be performed on both a licensed spectrum and an unlicensed spectrum. Communication may be performed on a spectrum below 6 gigahertz (gigahertz, GHz), or may be performed on a spectrum above 6 GHz, or may be performed on both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. A control subsystem that includes a base station function herein may be a control center in an application scenario of the foregoing terminal, such as a smart grid, an industrial control, a smart transportation, and a smart city. The function of the terminal may alternatively be performed by a module (for example, a chip or a modem) in the terminal, or may be performed by an apparatus including the function of the terminal.

In this application, the base station sends a downlink signal (or downlink information) to the terminal, where the downlink signal (or the downlink information) is carried in a downlink channel. The terminal sends an uplink signal (or uplink information) to the base station, where the uplink signal (or the uplink information) is carried in an uplink channel.

In recent years, with continuous development and progress of communication technologies, research on 5.5G is increasingly in-depth. The industry has proposed the 5.5G vision, and the 5.5G vision is enhancement and extension of a 5G scenario. On the basis of the 5G scenario, 5.5G expands three new scenarios, including uplink ultra-broadband (uplink centric broadband communication, UCBC), real-time broadband communication (real-time broadband communication, RTBC), and harmonized communication and sensing HCS (harmonized communication and sensing, HCS).

The HCS is mainly applied to two scenarios: internet of vehicles and uncrewed aerial vehicle. The HCS can be applied to support an autonomous driving technology. A massive multiple-input multiple-output (multiple-input multiple-output, MIMO) beam scanning technology of a cellular network is applied to the sensing field, so that both communication and sensing can be provided in the HCS scenario, and a positioning service can also be provided if extended to an indoor scenario.

According to a quantity of nodes participating in the sensing, in the HCS, single-node sensing and multi-node cooperative sensing may be classified. In the single-node sensing, a tangential speed cannot be measured, and complete environment information cannot be constructed. However, in the multi-node cooperative sensing, this problem can be well solved.

In a communication sensing process, after receiving a sensing signal, a network device needs to process the sensing signal, and then the network device needs to report data based on a processing result. In a conventional technology, an excessively large amount of data reported by a network device causes a large quantity of occupied bandwidth resources, which may finally affect a data reporting speed.

To resolve the foregoing problem, this application provides a data reporting method, a data receiving method, and a related device, to reduce, in a communication sensing process, a data amount of data reported by a network device.

The following describes a method procedure in embodiments of this application by using an example.

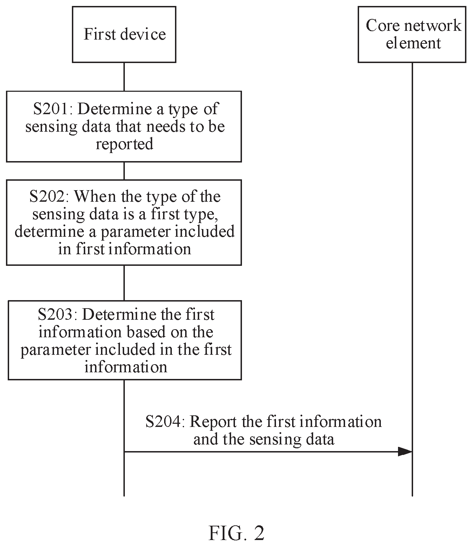

FIG. 2 is a diagram of a data reporting method according to this application. It should be noted that in FIG. 2, an example in which a first device is used as an execution body is used to illustrate the method. However, the execution body of the method is not limited in this application. Specifically, in FIG. 2 and a corresponding embodiment, S201 to S204 are performed by the first device, or may be performed by a chip, a chip system, or a processor that supports the first device in implementing the method, or may be a logical module or software that can implement all or a part of functions of the first device. The first device may be an access network element, for example, a base station, or may be user equipment, for example, a mobile phone. This is not limited in this application. In FIG. 2, an example in which a core network element is used as a device that receives sensing data and first information reported by the first device is used to illustrate the method. However, the execution body of the method is not limited in this application.

The method includes the following steps.

S201: The first device determines a type of sensing data that needs to be reported, where the sensing data is obtained by executing a sensing task.

It may be understood that, because the first device may have a capability of performing data processing on a sensing signal in a plurality of manners, and can obtain different types of sensing data, a type of sensing data that needs to be reported needs to be first determined. However, that all first devices need to determine types of sensing data is not limited in this application. For a first device that can report only one type of data, for example, a part of devices can only perform signal demodulation on a sensing signal to obtain a baseband signal, and cannot perform other data processing, for this type of first device, first information corresponding to this type of sensing data may be directly reported, and a type of the sensing data does not need to be first determined. Step S201 focuses on that all the first devices know types of sensing data that needs to be reported by the first devices. Whether the first devices have known the types of the sensing data and do not need to determine the types of the sensing data or whether the first devices need to determine the types of the sensing data that needs to be reported is not limited in this application.

It should be noted that, that step S201 is definitely performed after the first device obtains the sensing data is not limited in this application, and step S201 may alternatively be performed before the first device obtains the sensing data. When the type of the sensing data is determined before the first device obtains the sensing data, after determining the type of the sensing data, the first device processes the sensing signal received by the first device, so that the sensing data obtained through processing is of this type.

It should be noted that the first device may include a plurality of devices. The first device may include a device that sends the sensing signal, or may include a device that receives the sensing signal. Alternatively, the first device may be only a device that receives the sensing signal. This is not limited in this application.

Before step S201, the core network element receives a sensing task request message, where the request message is used to request to execute the sensing task in step S201. In a communication system, a plurality of devices may perform sensing. Therefore, the core network element needs to first determine devices that can participate in the sensing task in step S201, that is, determine devices that can be used as first devices. Specifically, the following process is included.

Optionally, a sensing function network element in the core network element receives a sensing task request message sent by an upper-layer network element, where the request message carries a requirement of the sensing task.

Optionally, the upper-layer network element is an application function (application function, AF) network element.

Optionally, the requirement of the sensing task is a QoS requirement, and the QoS requirement includes at least one of sensing resolution, sensing precision, a sensing range, a sensing refresh rate, a false detection rate, a miss detection rate, and a sensing delay.

Optionally, the core network element requests, in one of the following manners, a plurality of devices to send sensing capability information: The core network element sends a request message to the plurality of devices including the first device, where the message is used to request the devices to periodically report the sensing capability information, and then the core network element does not need to send the request message to the devices, and the devices periodically report the sensing capability information of the devices to the core network element; and each time receiving the sensing task, the core network element sends a request message to the plurality of devices including the first device, where the message is used to request the devices to send the sensing capability information.

In a possible implementation, the type of the sensing data is carried in a first request message, and before determining the type of the sensing data, the first device reports the sensing capability information to the core network element.

Optionally, the sensing capability information includes sensing resolution, sensing precision, or sensing range.

Optionally, the core network element determines, based on the sensing capability information and the requirement of the sensing task, devices that can participate in the sensing task.

For example, a sensing range of a device 1 includes an area in which a target 1 is located and an area in which a target 2 is located, and a sensing range of a device 2 includes an area in which a target 3 is located and an area in which a target 4 is located. The sensing task is sensing the target 2 and a target 5. Therefore, the core network element may determine that the device 1 can participate in the sensing task, that is, the device 1 can be used as the first device.

After determining the devices that can participate in the sensing task, the core network element may send the first request message to the devices that can participate in the sensing task, that is, send the first request message to the first device, where the first request message is used to request to execute the sensing task. That the first request message is definitely sent by the core network element is not limited in this application. For example, when the first device is user equipment, in this case, the core network element first sends the sensing task request message to a base station, and then the base station sends the first request message to the first device.

After receiving the first request message, the first device may determine the type of the sensing data in the following manner.

In a possible implementation, the first device determines the type of the sensing data based on the received first request message, where the first request message indicates to execute the sensing task.

It may be understood that the core network element or another device sends the first request message to the first device, to indicate the first device to execute the sensing task. Correspondingly, the first device receives the first request message, and then determines the type of the sensing data based on the first request message. Specifically, the first device may determine the type of the sensing data based on information carried in the first request message.

The information carried in the first request message may be different. Specifically, the information carried in the first request message includes at least one of the following.

### 1. The first request message carries the type of the sensing data.

In this case, the first device may directly obtain the type of the sensing data. Correspondingly, before sending the first request message, the core network element needs to determine the type of the sensing data.

Optionally, the core network element determines the type of the sensing data based on the sensing capability information of the first device and/or the requirement of the sensing task.

It may be understood that the core network element may determine the type of the sensing data based on the sensing capability information of the first device and the requirement of the sensing task. For example, when the sensing resolution of the first device cannot meet the requirement of the sensing task, the type of the sensing data reported by the first device is the baseband signal, so that the core network element further processes the baseband signal to obtain sensing data that meets the requirement. For example, when the sensing resolution that can be achieved by the first device is higher than the requirement of the sensing data, the core network may determine, based on the requirement of the sensing task, the type of the sensing data reported by the first device. For example, when the requirement of the sensing task is identifying a target A, the type of the sensing data uploaded by the first device is sensing data used to describe a feature of a target object; or the core network element may determine the type of the sensing data only based on the requirement of the sensing task, for example, if the requirement of the sensing task is extracting a signal feature quantity, the core network element determines that the type of the sensing data reported by the first device is data used to describe a signal feature; or the core network element may determine the type of the sensing data only based on the sensing capability information, for example, the sensing capability information indicates that the first device can only perform signal demodulation on the sensing signal to obtain the baseband signal, but cannot perform further processing, and in this case, the core network element may determine that the type of the sensing data reported by the first device is the baseband signal.

### 2. The first request message carries the requirement of the sensing task.

It should be noted that the requirement of the sensing task is carried in the sensing task request message received by the core network element.

In this case, the first device cannot directly obtain the type of the sensing data based on the first request message, and needs to determine the type of the sensing data. Specifically, the first device may determine the type of the sensing data in the following manner.

In a possible implementation, the first device determines the type of the sensing data based on the requirement of the sensing task and/or the sensing capability information of the first device.

Similar to determining the type of the sensing data by the core network, the first device may also determine the type of the sensing data based on the sensing capability information of the first device and the requirement of the sensing task; the first device may determine the type of the sensing data based on only the requirement of the sensing task; or the first device may determine the type of the sensing data based on only the sensing capability information. Details are not described herein again.

### 3. The first request message carries a first constraint.

After the core network element determines the type of the sensing data that needs to be reported by the first device, when the type of the sensing data is data used to describe a feature of a target object, if the sensing data reported by the first device includes a large quantity of target objects, a data amount of the sensing data is excessively large; or if the sensing data includes a large quantity of invalid target objects, the core network element needs to perform invalid analysis on the invalid target objects, and time and resources are wasted; or if the sensing data includes a small quantity of target objects or includes a small quantity of valid target objects, the core network element cannot analyze the target objects more comprehensively. Therefore, the core network element needs to notify the first device of a requirement of the core network element on a quantity of target objects included in the sensing data.

In a possible implementation, before reporting the first information and the sensing data, the first device receives the first constraint sent by the core network element, where the first constraint is used to constrain the quantity of target objects included in the sensing data.

It should be noted that the first request message may carry only the first constraint, or the first constraint may not be sent by using another request message. Sending of the first constraint does not depend on determining of the type of the sensing data. In other words, the first constraint does not need to be sent only when the type of the sensing data is determined. Further, it is not that the first device needs to send the first constraint only when any one of step S201 to step S204 needs to be performed. When the core network element needs to constrain the quantity of target objects reported by the first device, the core network element may send the first constraint to the first device.

Optionally, when the first device obtains the sensing data according to a target detection algorithm, the first constraint is a threshold of the target detection algorithm or a threshold of a threshold detection algorithm. After receiving the threshold, the first device can determine, based on the threshold, objects that are valid objects, that is, target objects, to report the target objects.

Optionally, the threshold may be a confidence threshold or an IoU threshold of the target detection algorithm.

Optionally, when the first device obtains the sensing data by estimating a parameter of a sensed object, the first constraint is a mean square error of an estimated amount of the parameter, and the parameter includes a distance, a speed, an angle, or a location.

Optionally, the first request message may further carry an identifier of the sensing task or an identifier of a corresponding sensing session.

Optionally, the first request message may further indicate the first device to establish a sensing resource configuration related to the sensing task. The core network element may alternatively indicate, by sending another request message, the first device to establish a sensing resource configuration related to the sensing task. Correspondingly, the first device performs the sensing resource configuration, and after completing establishment of the sensing resource configuration, sends an indication message to the core network element, to indicate that the sensing resource configuration has been completed.

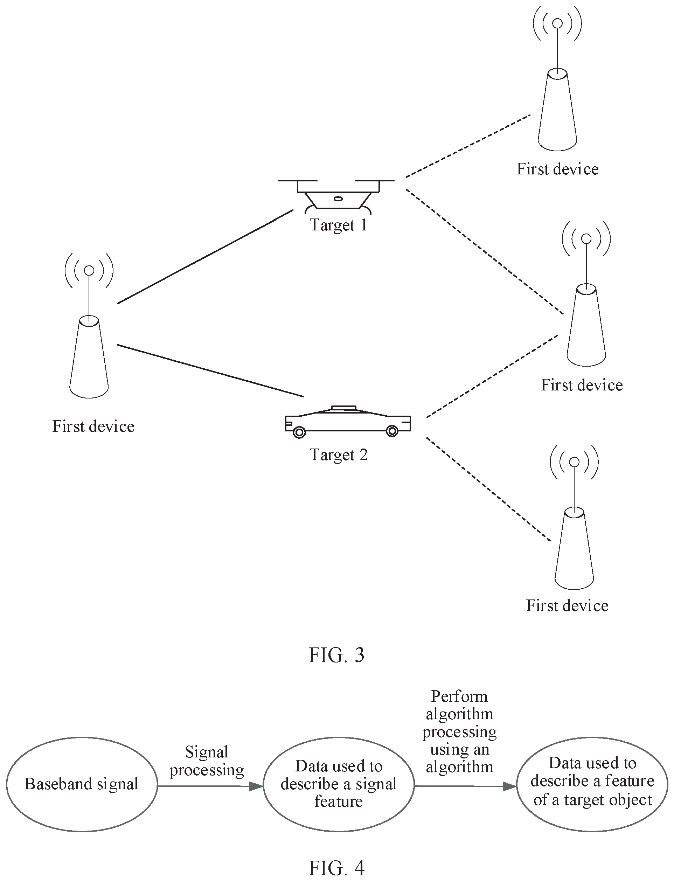

After the sensing resource configuration is completed, the first device generates the sensing signal, and sends the sensing signal to a sensing range indicated by the requirement of the sensing task. The sensing signal is received by another first device after being reflected by the target in an environment. A received signal obtained by reflecting the sensing signal is also referred to as an echo signal, and is referred to as the sensing signal in the following. FIG. 3 is used as an example. A first device in FIG. 3 is a general term of a device that sends a sensing signal and a device that receives the sensing signal. One device in the first device sends a sensing signal, and the sensing signal is received by another first device after being reflected by a target 1 and a target 2.

Optionally, when the type of the sensing data reported by the first device is the baseband signal, the first device needs to report configuration information of a sensing resource. The configuration information of the sensing resource is carried in the indication message. If the configuration information of the sensing resource is not carried in the indication message, the core network element sends a request message to the first device, to request the first device to send the configuration information of the sensing resource.

It should be noted that the configuration information of the sensing resource may be included in first information in the subsequent step S204, and sent together with other first information, or may be separately sent, and carried in the foregoing indication message or another message.

Optionally, the configuration information of the sensing resource includes a time-frequency domain resource configuration of the sensing signal or a sequence format used in the sensing signal.

Optionally, a device that reports the configuration information of the sensing resource may be a first device that sends the sensing signal, or may be a device that receives the sensing signal. When the device is the first device that sends the sensing signal, the configuration information may be carried in the foregoing indication message. When the device is the first device that receives the sensing signal, the device that sends the sensing signal sends the configuration information of the sensing resource to the device that receives the sensing signal, so that the device that receives the sensing signal may demodulate the sensing signal based on the configuration information, and report the configuration information of the sensing resource to the core network element.

Optionally, when the first device is a base station, the core network element sends the first request message, where the request message indicates the first device to establish a sensing resource configuration related to the sensing task. The base station receives the first request message, performs the sensing resource configuration, and generates and sends the sensing signal. When the first device is user equipment, because the user equipment cannot directly perform the sensing resource configuration, the core network element needs to first send the first request message to a base station around the user equipment. After receiving the first request message, the base station performs the sensing resource configuration, and sends indication information of a sensing resource that can be used to the user equipment. After receiving the indication information, the user equipment selects the sensing resource from the sensing resource, and generates and sends the sensing signal.

S202: When the type of the sensing data is a first type, the first device determines a parameter included in the first information.

It should be noted that the first information is auxiliary information used for processing the sensing data.

According to a conclusion reached by a current 3rd generation partnership project (3rd generation partnership project, 3GPP) service and system aspects (service and system aspects, SA), the sensing data may be directly reported, or may be reported after data processing, and the first device may process the baseband signal at different degrees. Before sensing data integration is performed, because sensing data with different data processing degrees cannot be directly integrated, the core network element needs to process the sensing data, to enable the sensing data to be at a same processing degree. Therefore, for the data with the different processing degrees, the core network needs to perform different data processing, and parameters included in the first information that needs to be reported by the first device and that is used for assisting in processing the data are also different. Therefore, in this application, the sensing data is classified into different types of data based on the different processing degrees of the sensing signal, so that the first device reports corresponding first information based on the type of the sensing data. Specifically, the following three types are included.
1. Baseband signal: After receiving the sensing signal, the first device performs a related signal demodulation operation to obtain the baseband signal, where the baseband signal includes a real part and an imaginary part, and is also referred to as IQ data.
2. Data used to describe a signal feature: The data is corresponding sensing data obtained by performing related signal processing, for example, channel estimation or Fourier transform, on the baseband signal on the basis of the baseband signal.
3. Data used to describe a feature of a target object: The data is sensing data obtained by performing processing, according to an algorithm on the basis of the data used to describe the signal feature, on the data used to describe the signal feature, to implement sensing of the target object.

The three types are in a progressive relationship in terms of data processing degree. As shown in FIG. 4, the data used to describe the signal feature is obtained by performing signal processing on the baseband signal, and the data used to describe the feature of the target object is obtained by processing, according to the algorithm, the data used to describe the signal feature.

As described above, the parameters included in the corresponding first information vary with the different processing degrees of the sensing data, and this is determined by the feature of the data. As shown in Table 1, parameters that need to be included in the first information reported by the first device vary with the different processing degrees of the sensing data. Details are described below.

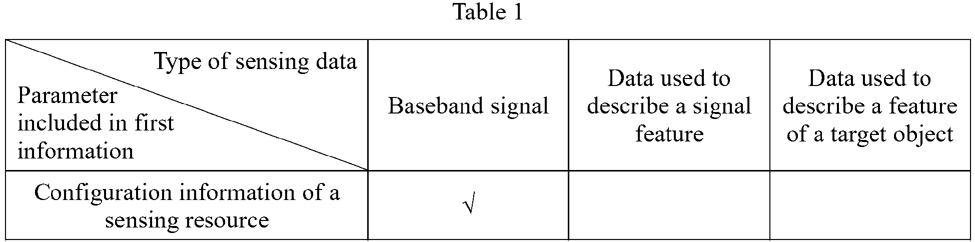

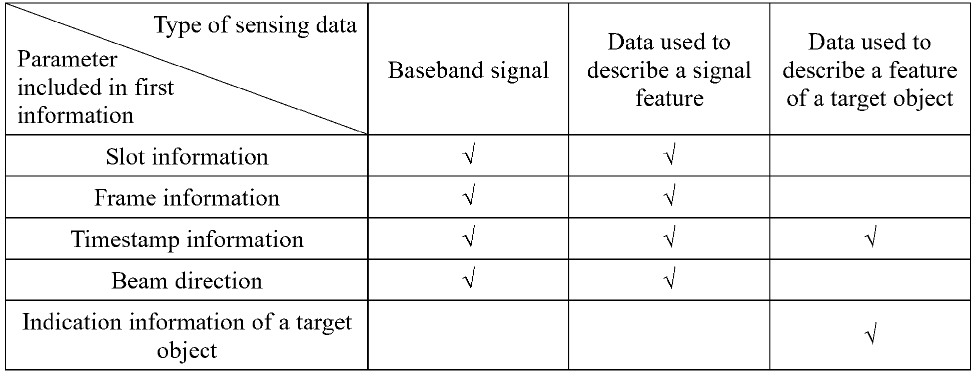

In Table 1, if there is a tick in a cell, it indicates that first information corresponding to the type of the sensing data may include the parameter.

When the type of the sensing data, that is, the first type, is the baseband signal, because the first device directly sends the baseband signal to the core network element, the core network element cannot demodulate the baseband signal. Therefore, the first device needs to send, to the core network element, information used for assisting in demodulating the baseband signal. Therefore, the first device may send the configuration information of the sensing resource, so that the core network element may determine, based on the configuration information of the sensing resource, a time-frequency domain resource configuration of the baseband signal and a sequence format used in the baseband signal, to assist in demodulating the baseband signal. In a multi-node collaborative sensing scenario, the baseband signal reported by the first device needs to be integrated with other sensing data. Therefore, the core network element needs to perform signal processing on the baseband signal, so that the core network element can integrate the baseband signal and another type of sensing data. Therefore, the first device may further report the slot information or the frame information, so that the core network element may determine, based on the slot information or the frame information, a time domain location of the baseband signal reported by the first device in all received signals, so that the core network element performs signal processing. Therefore, the first device may report the beam direction, and the beam direction is used to notify the core network element of a beam direction used by the first device, so that the core network element processes the baseband signal by using a correct beam configuration. To achieve a better effect of integrating the baseband signal and the other sensing data, the first device needs to report the timestamp information. The timestamp information is used to notify the core network element of a time period in which the first device performs sensing, so that the core network element performs sensing data integration.

In a possible implementation, when the first type is a baseband signal, the first device determines that the first information includes at least one of the following parameters: configuration information of a sensing resource, slot information, frame information, timestamp information, and a beam direction.

Optionally, when the first type is a baseband signal, the first information includes at least one of the following parameters: configuration information of a sensing resource, slot information, frame information, timestamp information, and a beam direction.

Optionally, when the first type is a baseband signal, the first information does not include indication information of a target object.

When the type of the sensing data, that is, the first type, is the data used to describe the signal feature, because the first device has demodulated the baseband signal into the data used to describe the signal feature, the first device does not need to send, to the core network element, information used for assisting in demodulating the baseband signal. The data used to describe the signal feature is a result of signal processing performed by the first device. To assist in integrating the data and other sensing data, the core network element may need to perform further signal processing on the data. Therefore, the first device needs to report the slot information or the frame information, so that the core network element may determine, based on the slot information or the frame information, a time domain location of the baseband signal reported by the first device in all received signals, so that the core network element performs further signal processing. The first device further needs to report the beam direction, and the beam direction is used to notify the core network element of information, for example, a beam direction used by the first device, so that the core network element perform signal processing on the data by using a correct beam configuration. To achieve a better effect of integrating the data and the other sensing data, the first device needs to report the timestamp information. The timestamp information is used to notify the core network element of a time period in which the first device performs sensing, so that the core network element performs sensing data integration.

In a possible implementation, when the first type is data used to describe a signal feature, the first device determines that the first information includes at least one of the following parameters: slot information, frame information, timestamp information, and a beam direction.

Optionally, when the first type is data used to describe a signal feature, the first information includes at least one of the following parameters: slot information, frame information, timestamp information, and a beam direction.

Optionally, when the first type is data used to describe a signal feature, the first information does not include configuration information of a sensing resource and indication information of a target object.

After receiving the sensing signal, the first device first demodulates the sensing signal to obtain the baseband signal, and then performs signal processing on the baseband signal to obtain the data used to describe the signal feature. The first device may perform signal processing on the baseband signal in the following manner.

Optionally, the first device performs channel estimation on the baseband signal to obtain CSI information and reports the CSI information as the sensing data to the core network element.

Optionally, the first device performs Fourier transform on the CSI information to obtain a delay spectrum, a distance spectrum, a velocity spectrum, or an angle spectrum of the sensing signal, and reports the data as the sensing data to the core network element.

The delay spectrum, the distance spectrum, the velocity spectrum, and the like may be used by the core network to determine a two-dimensional representation of the sensing signal, so that the core network element performs further target detection.

Optionally, the first device calculates reference signal received power, reference signal received quality, a signal-to-noise ratio, and the like of the baseband signal, and reports the data as the sensing data to the core network element.

When the type of the sensing data, that is, the first type, is the data used to describe the feature of the target object, because the first device processes the signal in this case, the sensing data sent by the first device is a result of sensing a target. Therefore, the first device does not need to send, to the core network element, information used for assisting in processing the signal. In a case of multi-node collaborative sensing, the core network needs to integrate the sensing data and other sensing data. To achieve a better effect of integrating the baseband signal and the other sensing data, the first device needs to report the indication information of the target object. Based on the indication information of the target object, the core network element can determine whether a sensed object of the sensing data and a sensed object of the other sensing data are a same object. The first device needs to report the timestamp information, where the timestamp information is used to notify the core network element of a time period in which the first device performs sensing, so that the core network element performs sensing data integration.

In a possible implementation, when the first type is data used to describe a feature of a target object, the first device determines that the first information includes at least one of the following parameters: indication information of the target object and timestamp information, where the target object is a sensed object of the sensing task.

Optionally, when the first type is data used to describe a feature of a target object, the first information includes at least one of the following parameters: indication information of the target object and timestamp information.

Optionally, when the first type is data used to describe a feature of a target object, the first information does not include configuration information of a sensing resource, slot information, frame information, and a beam direction.

Optionally, the indication information of the target object is an identifier of the target object.

When the first device is user equipment, because the user equipment moves continuously, and determining of a parameter, for example, a location of the target object is closely related to a location of the user equipment that performs sensing, the user equipment needs to report an absolute coordinate system of an area that can be sensed by the user equipment or the location of the user equipment, so that the core network element performs multi-node data integration.

Optionally, when the first device is user equipment, first information reported by the user equipment to the core network element further includes location information of the user equipment or an absolute coordinate system of a sensing area of the user equipment.

Optionally, when the type of the sensing data is the first type, the parameter included in the first information may be determined by using the first device, or the parameter included in the first information may be determined by using the core network element.

Specifically, the core network element may determine, in one of the following manners, the parameter included in the first information, and notify the first device of a parameter that needs to be included in the first information:
1. The core network element determines, based on the requirement of the sensing task and/or the sensing capability information, the type of the sensing data that needs to be reported by the first device. When the type of the sensing data is the first type, the core network element determines the auxiliary information required for processing the type of the sensing data, to determine the parameter included in the first information, and sends an indication message to the first device, where the message indicates the parameter that needs to be included in the first information.
2. The core network element receives the sensing data reported by the first device, and the core network element determines the auxiliary information required for processing the sensing data, to determine the parameter included in the first information, and sends an indication message to the first device, where the message indicates the parameter that needs to be included in the first information.

Optionally, the indication message is the first request message, that is, the first request message may further indicate the parameter that needs to be included in the first information, to indicate the first device to report the first information including the parameter.

Correspondingly, after receiving the first request message or the indication message, the first device may directly obtain, based on the first request message or the indication message, the parameter that needs to be included in the first information, and the first device does not need to determine the parameter included in the first information only after determining that the type of the sensing data is the first type.

S203: The first device determines the first information based on the parameter included in the first information.

It may be understood that, in step S202, only the parameter included in the first information is obtained, and a specific value of each parameter needs to be further determined. As described above, the first information may include at least one of the following parameters: the configuration information of the sensing resource, the slot information, the frame information, the timestamp information, the beam direction, and the indication information of the target object.

Specifically, when the first information is the configuration information of the sensing resource, the slot information, the frame information, and the beam direction, the first device that sends the sensing signal sends these pieces of information together with the sensing signal, so that the first device that receives the sensing signal may determine values of these pieces of information. When the first information is the timestamp information, the first device determines a value of the timestamp information based on a time period in which the first device performs sensing. When the first information is the indication information of the target, after the first device obtains the sensing data through algorithm processing, a sensing result of the target object may be obtained, and a value of the indication information of the target may be determined.

S204: The first device reports the first information and the sensing data to the core network element.

That the sensing data and the first information need to be sent together is not limited in this application, and that all parameters included in the first information need to be sent together is not limited in this application either. In step S204, that the first device needs to report the first information and the sensing data to the core network element is not limited from a perspective of the result.

Correspondingly, the core network element receives the first information and the sensing data, and the core network element processes the sensing data based on the first information. Specifically, the core network element may process the sensing data in the following manner.

Optionally, if the first type is the configuration information of the sensing resource, the slot information of the sensing signal, or the frame information or the beam direction of the sensing signal, the core network element demodulates the sensing data based on the first information; or if the first type is the timestamp information, the core network element determines, based on the first information, a moment at which the first device performs sensing, and integrates the sensing data and other sensing data based on the first information; or if the first type is the indication information of the target object, the core network element determines, based on the indication information of the target object, whether the sensing data and an object described by other sensing data are a same object. If the sensing data and the object described by the other sensing data are the same object, the core network element integrates the sensing data and the other sensing data.

After the first device reports the sensing data, if the sensing data includes a small quantity of targets, it indicates that the previously set first constraint is too strict, and the constraint needs to be adjusted; or if the sensing data includes a large quantity of targets, it indicates that the previously set first constraint is too loose, and the constraint needs to be adjusted. Therefore, the core network element needs to adjust the first constraint based on the sensing data reported by the first device.

In a possible implementation, the core network element adjusts the first constraint based on the quantity of the target objects included in the sensing data, to obtain a second constraint; and the core network element sends the second constraint.

Based on the technical solution in FIG. 2, when the type of the sensing data reported by the first device is the first type, the core network element determines the parameter included in the first information, where the first information is the auxiliary information used for processing the sensing data. In other words, in the technical solution based on FIG. 2, the core network does not need to enable a network device to report auxiliary information required for each type of sensing data, but only enables the network device to report auxiliary information required for the first type of sensing data. Therefore, based on the technical solution in FIG. 2, a data amount of information that is reported by the network device and that is used for assisting in processing the sensing data can be reduced, thereby reducing a data amount of data reported by the network device.

The following describes the method shown in FIG. 2 by using an example with reference to four instances.

The following four instances are all possible implementations of the method shown in FIG. 2. Instance 1a and Embodiment 1b are examples in which the first type in step S202 is the baseband signal. Embodiment 1a is an example in which the first device is the base station. Embodiment 1b is an example in which the first device is the user equipment. Example 2 is an example in which the first type in step S202 is the data used to describe the signal feature. Example 2 is an example in which the first type in step S202 is the data used to describe the feature of the target object. In Embodiment 3, the target detection algorithm is used to obtain the sensing data.

The first device may be the base station or the user equipment. In Embodiment 1a and Embodiment 1b, the base station or the user equipment generates and sends the sensing signal, and the sensing signal is received by the base station or the user equipment. The base station or the user equipment that receives the sensing signal performs signal demodulation on the sensing signal to obtain the baseband signal, and reports the baseband signal to the core network. The core network may perform a related operation on the baseband signal based on sensing signal configuration information sent by the base station or the user equipment in advance, to perform a next operation such as signal processing. A core idea of Embodiment 1a and Embodiment 1b is that after configuring the sensing signal, the base station or the user equipment needs to send related configuration information of the sensing signal to the core network.

In the current 3GPP SA1 discussion, it has been determined that sensing modes may be classified into the following six modes:
1. The base station performs sending and receiving: The sensing signal is sent by the base station, and then is received by the base station after being reflected by the target in the environment.
2. A base station A performs sending, and a base station B performs receiving: The sensing signal is sent by the base station A, and then is received by the base station B after being reflected by the target in the environment.
3. The base station performs sending, and the user equipment performs receiving: The sensing signal is sent by the base station, and then is received by the user equipment after being reflected by the target in the environment.
4. The user equipment performs sending and the base station performs receiving: The sensing signal is sent by the user equipment, and then is received by the base station after being reflected by the target in the environment.
5. The user equipment performs sending and receiving: The sensing signal is sent by the user equipment, and then is received by the user equipment after being reflected by the target in the environment.
6. User equipment A performs sending, and user equipment B performs receiving: The sensing signal is sent by the user equipment A, and then is received by the user equipment B after being reflected by the target in the environment.

In the first to the fourth sensing modes, the base station generates the sensing resource configuration and the sensing signal. Therefore, the base station only needs to send the generated sensing resource configuration and the generated sensing signal to the core network. Embodiment 1a is a case in which the technical solution of this application is applied to the four sensing modes.

In the fifth and sixth sensing modes, although the base station may configure the sensing resource, the user equipment may finally select a sensing resource in the sensing resource and generate a corresponding sensing signal configuration. Therefore, in the two modes, the user equipment needs to send configuration information of a sensing resource used by the user equipment to the core network element.

Embodiment 1a

In this embodiment, an example in which the first type in step S202 is the baseband signal is used for description. This embodiment is mainly directed to four sensing modes: The base station performs sending and receiving, the base station A performs sending and the base station B performs receiving, the base station performs sending and the user equipment performs receiving, and the user equipment performs sending and the base station performs receiving.

For ease of description, the following uses an example in which the device that sends the sensing signal is the base station.

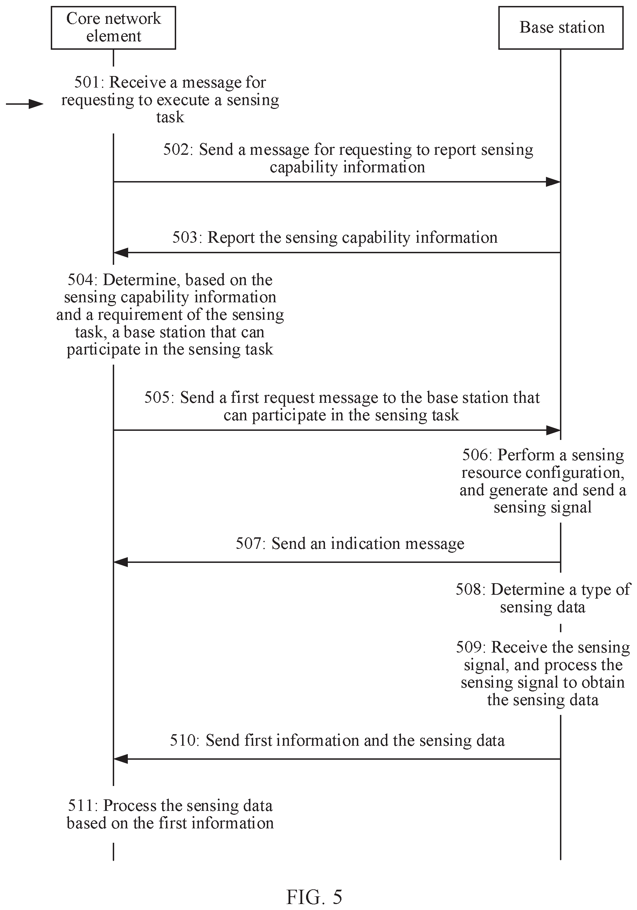

FIG. 5 is a diagram of Embodiment 1a. A specific process in FIG. 5 includes the following steps.

501: A core network element receives a message for requesting to execute a sensing task.

The message carries a QoS requirement of the sensing task, and the message is sent by an AF network element to a sensing function network element in the core network element.

The QoS requirement of the sensing task includes at least one of sensing resolution, sensing precision, a sensing range, a sensing refresh rate, a false detection rate, a miss detection rate, and a sensing delay.

The core network element has two methods for requesting a base station to send sensing capability information. The first method is that the core network element sends a request message to the base station, where the message is used to request the base station to periodically report the sensing capability information, and then the core network element does not need to send the request message to the base station, and the base station periodically reports the sensing capability information of the base station to the core network element; and the second method is that each time receiving the sensing task, the core network element sends the request message to the base station, where the message is used to request the base station to send the sensing capability information.

In the first case, step 502 does not need to be performed after step 501, and step 504 is directly performed, because the base station automatically reports the sensing capability information to the core network element at an interval of one period. In the second case, step 502 needs to be performed after step 501.

502: The core network element sends, to the base station, a message for requesting to report the sensing capability information.

503: The base station reports the sensing capability information.

The sensing capability information includes sensing resolution, sensing precision, or sensing range.

504: The core network element determines, based on the sensing capability information and the QoS requirement of the sensing task, a base station that can participate in the sensing task.

505: The core network element sends a first request message to the base station that can participate in the sensing task.

The first request message indicates the base station to execute the sensing task and performs a sensing resource configuration.

Information carried in the first request message includes: the QoS requirement of the sensing task or a type of sensing data, and an identifier of the sensing task or an identifier of a corresponding sensing session.

When the first request message carries the type of the sensing data, before step 505, the core network element needs to determine the type of the sensing data. Specifically, the core network element may determine the type of the sensing data based on the QoS requirement of the sensing task and/or the sensing capability information.

506: The base station performs the sensing resource configuration, and generates and sends a sensing signal.

507: The base station sends an indication message to the core network element.

The indication message indicates that the sensing resource configuration has been completed.

If the indication message does not carry configuration information of the sensing resource, the core network element further needs to send a second request message to user equipment. The second request message is a message used to request to report the configuration information of the sensing resource. Correspondingly, the user equipment sends the configuration information of the sensing resource to the core network element. If the indication message carries the configuration information of the sensing resource, the core network element does not need to send the second request message to the user equipment.

The configuration information of the sensing resource includes a time-frequency domain resource configuration of the sensing signal, a sequence format used in the sensing signal, and the like.

508: The base station determines the type of the sensing data.

If the first request message in step 505 does not carry the type of the sensing data, the base station may determine the type of the sensing data based on the QoS requirement of the sensing task and/or the sensing capability information. In Embodiment 1a, an example in which the first type is the baseband signal is used. To be specific, after step 508, the base station determines that the type of the sensing data is the baseband signal. Correspondingly, a parameter included in first information is at least one of the following parameters: the configuration information of the sensing resource, slot information, frame information, timestamp information, and a beam direction.

509: The base station receives the sensing signal, and processes the sensing signal to obtain the sensing data.

Specifically, the base station performs signal demodulation on the sensing signal to obtain the baseband signal.

510: The base station sends the first information and the sensing data to the core network element.

As described above, the parameter included in the first information is at least one of the following parameters: the configuration information of the sensing resource, the slot information, the frame information, the timestamp information, and the beam direction.

The sensing resource configuration includes a time-frequency domain resource configuration of the sensing signal, a sequence format used in the sensing signal, and the like.

511: The core network element processes the sensing data based on the first information.

The core network element demodulates the sensing data based on the configuration information of the sensing resource, the slot information of the sensing signal, and the frame information or the beam direction of the sensing signal. The core network element integrates the sensing data and other sensing data based on the timestamp information.

### Embodiment 1b

In this embodiment, an example in which the first type in step S202 is the baseband signal is used for description. This embodiment is mainly directed to two sensing modes: The user equipment performs sending and performs receiving, and the user equipment A performs sending and the user equipment B performs receiving.

For ease of description, the following user equipment may be user equipment that sends the sensing signal, or may be user equipment that receives the sensing signal.

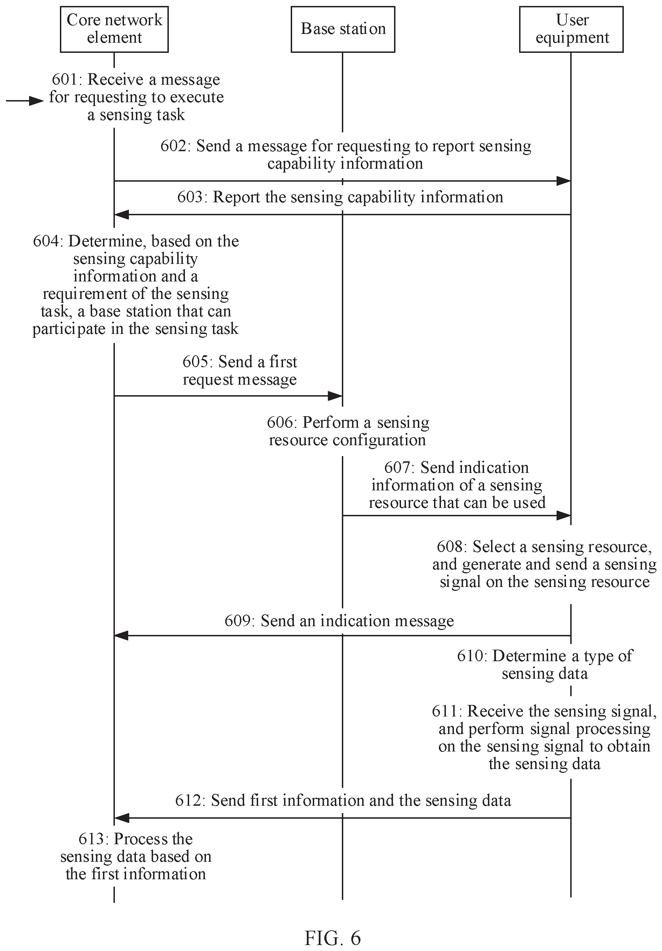

FIG. 6 is a diagram of Embodiment 1b. A specific process in FIG. 6 includes the following steps.

601: A core network element receives a message for requesting to execute a sensing task.

602: The core network element sends, to user equipment, a message for requesting to report sensing capability information.

603: The user equipment reports the sensing capability information.

604: The core network element determines, based on the sensing capability information and a QoS requirement of the sensing task, a base station that can participate in the sensing task.

Steps 601 to 604 are similar to steps 501 to 504 in Embodiment 1a, and are not described herein again.

605: The core network element sends a first request message to the base station.

Because the user equipment cannot perform a sensing resource configuration, the core network element needs to send the first request message to a base station near the user equipment. Information carried in the request message includes: the QoS requirement of the sensing task or a type of sensing data, and an identifier of the sensing task or an identifier of a corresponding sensing session.

606: The base station performs the sensing resource configuration.

After receiving the first request message, the base station may forward the first request message to the user equipment, and perform the sensing resource configuration based on the first request message.

607: The base station sends indication information of a sensing resource that can be used to the user equipment.

608: The user equipment selects a sensing resource, and generates and sends a sensing signal on the sensing resource.

Specifically, the user equipment may receive the indication information of the sensing resource in two manners. First, the user equipment may read broadcast information sent by the base station, where the broadcast information includes a sensing resource pool related to the sensing task. Second, the user equipment may receive dedicated signaling sent by the base station, for example, an RRC message, where the dedicated signaling includes a sensing resource pool related to the sensing task. The sensing resource pool is a series of sensing resources related to the sensing task. The user equipment may select a required sensing resource from the sensing resource pool, and then generate a corresponding sensing signal on the sensing resource.

609: The user equipment sends an indication message to the core network element.

610: The base station determines the type of the sensing data.

611: The user equipment receives the sensing signal, and performs signal processing on the sensing signal to obtain the sensing data.

612: The user equipment sends first information and the sensing data to the core network element.

613: The core network element processes the sensing data based on the first information.

Steps 609 to 613 are similar to steps 507 to 511 in Embodiment 1a, and are not described herein again.

Beneficial effects of Embodiment 1a and Embodiment 1b are as follows: The base station or the user equipment may report the baseband signal to the core network. Because the baseband signal includes complete channel information, a large performance gain may be obtained in a process of information integration for multi-node cooperative sensing.

### Embodiment 2

In this embodiment, an example in which the first type in step S202 is the data used to describe the signal feature by the user is used for description. This embodiment may be mainly directed to six sensing modes: The base station performs sending and receiving, the base station A performs sending and the base station B performs receiving, the base station performs sending and the user equipment performs receiving, the user equipment performs sending and the base station performs receiving, the user equipment performs sending and performs receiving, and the user equipment A performs sending and the user equipment B performs receiving.

For ease of description, the following uses an example in which both the device that receives the sensing signal and the device that sends the sensing signal are base stations.

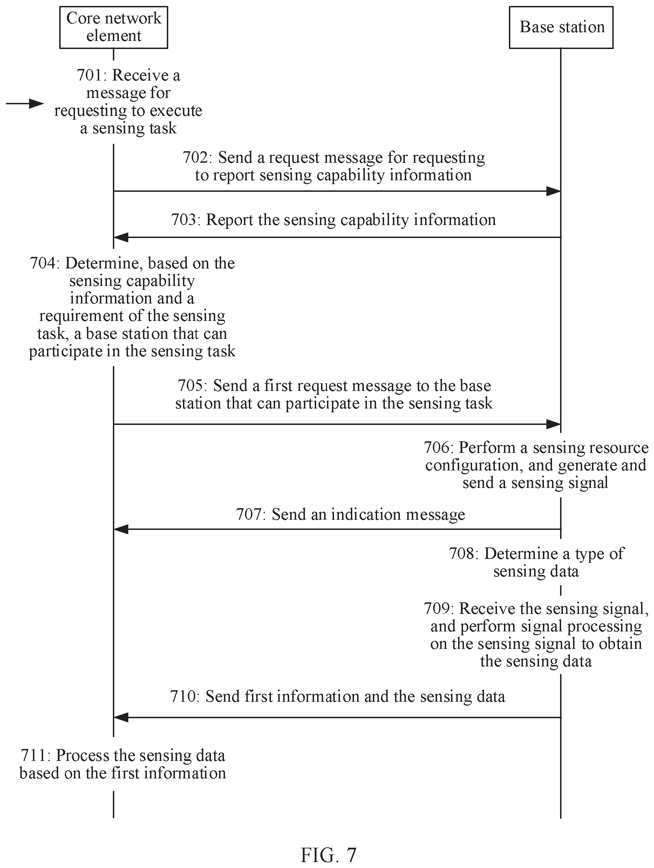

FIG. 7 is a diagram of Embodiment 2. A specific process in FIG. 7 includes the following steps.

701: A core network element receives a message for requesting to execute a sensing task.

702: The core network element sends, to a base station, a message for requesting to report sensing capability information.

703: The base station reports the sensing capability information.

704: The core network element determines, based on the sensing capability information, a base station that can participate in the sensing task and a type of sensing data that the base station needs to report.

Steps 701 to 704 are similar to steps 501 to 504 in Embodiment 1a, and are not described herein again.

After step 704, if there are four modes: The base station performs sending and receiving, the base station A performs sending and the base station B performs receiving, the base station performs sending and the user equipment performs receiving, the user equipment performs sending and the base station performs receiving, step 705 and step 706 are performed; or if there are two modes: The user equipment performs sending and performs receiving, and the user equipment A performs sending and the user equipment B performs receiving, after step 704, reference may be made to 605 to 608 in Embodiment 1b.

705: The core network element sends a first request message to the base station that can participate in the sensing task.

706: The base station performs a sensing resource configuration, and generates and sends a sensing signal.

Steps 705 and 706 are similar to steps 505 and 506 in Embodiment 1a, and are not described herein again.

707: The base station sends an indication message to the core network element.

Because the first type is the data used to describe the signal feature, when the base station sends the indication message to the core network element to indicate that the sensing resource configuration is completed, the indication message does not need to carry configuration information of a sensing resource.

708: The base station determines the type of the sensing data.

If the first request message in step 705 does not carry the type of the sensing data, the base station may determine the type of the sensing data based on a QoS requirement of the sensing task and/or the sensing capability information. In Embodiment 2, an example in which the first type is the data used to describe the signal feature is used. To be specific, after step 708, the base station determines that the type of the sensing data is the data used to describe the signal feature. Correspondingly, a parameter included in first information is at least one of the following parameters: slot information, frame information, timestamp information, and a beam direction.

709: The base station receives the sensing signal, and performs signal processing on the sensing signal to obtain the sensing data.

Specifically, the signal processing includes:
The base station performs channel estimation on a baseband signal to obtain CSI information; and
the base station performs Fourier transform on the CSI information to obtain a delay spectrum, a distance spectrum, a velocity spectrum, or an angle spectrum of the sensing signal, where
the base station calculates reference signal received power, reference signal received quality, a signal-to-noise ratio, and the like of the baseband signal.

710: The base station sends the first information and the sensing data to the core network element.

The sensing data includes the CSI information, the delay spectrum, the distance spectrum, the velocity spectrum, the angle spectrum, the reference signal received power, the reference signal received quality, or the signal-to-noise ratio.

As described above, the parameter included in the first information is at least one of the following parameters: slot information, frame information, timestamp information, and a beam direction.

711: The core network element processes the sensing data based on the first information.

The core network element performs signal processing on the sensing data based on the slot information of the sensing signal, and the frame information or the beam direction of the sensing signal. The core network element integrates the sensing data and other sensing data based on the timestamp information.

Beneficial effects of this embodiment are as follows: The base station or the user equipment may report the data used to describe the signal feature to the core network, where the data includes more channel information. Compared with reporting the baseband signal, reporting the data greatly reduces a reported data amount, and is suitable for sensing reporting of the user equipment.

### Embodiment 3

In this embodiment, an example in which the first type in step S202 is the data used to describe the feature of the target object by the user is used for description. This embodiment may be mainly directed to six sensing modes: The base station performs sending and receiving, the base station A performs sending and the base station B performs receiving, the base station performs sending and the user equipment performs receiving, the user equipment performs sending and the base station performs receiving, the user equipment performs sending and performs receiving, and the user equipment A performs sending and the user equipment B performs receiving.

For ease of description, the following uses an example in which both the device that receives the sensing signal and the device that sends the sensing signal are base stations.

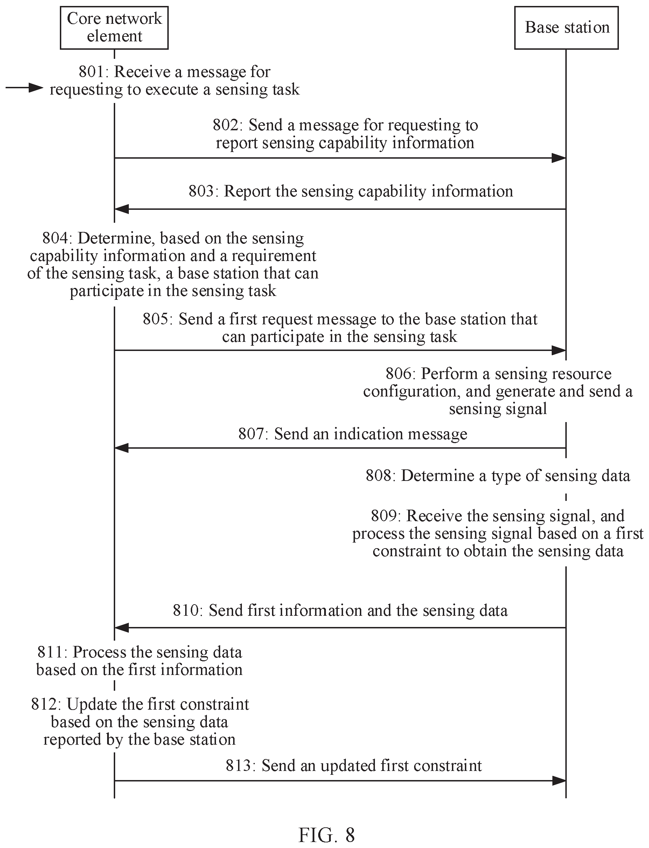

FIG. 8 is a diagram of Embodiment 3. A specific process in FIG. 8 includes the following steps.

801: A core network element receives a message for requesting to execute a sensing task.

802: The core network element sends, to a base station, a message for requesting to report sensing capability information.

803: The base station reports the sensing capability information.

804: The core network element determines, based on the sensing capability information, a base station that can participate in the sensing task and a type of sensing data that the base station needs to report.

Steps 801 to 804 are similar to steps 501 to 504 in Embodiment 1a, and are not described herein again.

After step 804, if there are four modes: The base station performs sending and receiving, the base station A performs sending and the base station B performs receiving, the base station performs sending and the user equipment performs receiving, the user equipment performs sending and the base station performs receiving, step 805 and step 806 are performed; or if there are two modes: The user equipment performs sending and performs receiving, and the user equipment A performs sending and the user equipment B performs receiving, after step 804, reference may be made to 605 to 608 in Embodiment 1b.

805: The core network element sends a first request message to the base station that can participate in the sensing task.

The first request message indicates the base station to execute the sensing task and performs a sensing resource configuration.

Information carried in the first request message includes: a QoS requirement of the sensing task or the type of the sensing data, and an identifier of the sensing task or an identifier of a corresponding sensing session.

When the first request message carries the type of the sensing data, before step 805, the core network element needs to determine the type of the sensing data. Specifically, the core network element may determine the type of the sensing data based on the QoS requirement of the sensing task and/or the sensing capability information.

The first request message carries a first constraint.

When the base station obtains the sensing data by estimating a parameter of a target object, the first constraint is a mean square error of an estimated amount of the parameter, and the parameter includes a distance, a speed, an angle, or a location.

When the base station obtains the sensing data according to a target detection algorithm, the first constraint is a threshold of the target detection algorithm or a threshold of a threshold detection algorithm. After receiving the threshold, the first device can determine, based on the threshold, objects that are valid objects, that is, target objects, to report the target objects.

The threshold may be a confidence threshold or an IoU threshold of the target detection algorithm.

The first request message may further carry an identifier of the sensing task or an identifier of a corresponding sensing session.

806: The base station performs a sensing resource configuration, and generates and sends a sensing signal.

Refer to step 506 in Embodiment 1a.

807: The base station sends an indication message to the core network element.

Because the first type is the data used to describe the signal feature, when the base station sends the indication message to the core network element to indicate that the sensing resource configuration is completed, the indication message does not need to carry configuration information of a sensing resource.

808: The base station determines the type of the sensing data.

If the first request message in step 805 does not carry the type of the sensing data, the base station may determine the type of the sensing data based on the QoS requirement of the sensing task and/or the sensing capability information. In Embodiment 3, an example in which the first type is the data used to describe the feature of the target object is used. To be specific, after step 808, the base station determines that the type of the sensing data is the data used to describe the feature of the target object. Correspondingly, a parameter included in first information is at least one of the following parameters: indication information of the target object and timestamp information.

809: The base station receives the sensing signal, and processes the sensing signal based on the first constraint to obtain the sensing data.

The processing includes: The base station estimates the parameter of the target object; and the base station obtains the sensing data according to the target detection algorithm.

810: The base station sends the first information and the sensing data to the core network element.

The sensing data includes a quantity of target objects, a status of the target object, a distance of the target object, a speed of the target object, an angle of the target object, or a location of the target object.

As described above, the parameter included in the first information is at least one of the following parameters: the indication information of the target object and the timestamp information.

811: The core network element processes the sensing data based on the first information.

The core network element integrates the sensing data and other sensing data based on the timestamp information. The core network may determine, based on the indication information of the target object, that sensed targets are a same target, to facilitate data integration.

812: The core network element updates the first constraint based on the sensing data reported by the base station.

The core network element updates the first constraint based on the quantity of target objects included in the sensing data. For example, the core network element finds that there are a small quantity of target objects or there is no target object in the reported sensing data. This may be because the first constraint is set too strict. In this case, a standard of the first constraint is lowered. If there are a large quantity of target objects in a sensing result, the standard of the first constraint may be raised.

813: The core network element sends an updated first constraint to the base station.

Beneficial effects of this embodiment are that: The base station or the user equipment may report the sensing result data to the core network. Compared with the baseband signal, channel information included in the sensing result data is reduced greatly, but a data amount is greatly reduced, thereby reducing pressure of reporting by the base station or the user equipment. In addition, the indication information of the target object and the like are reported, thereby reducing a calculation amount of core network data integration.

The above describes embodiments of this application from a perspective of the methods. The following describes communication apparatuses in embodiments of this application from a perspective of specific apparatus implementations.

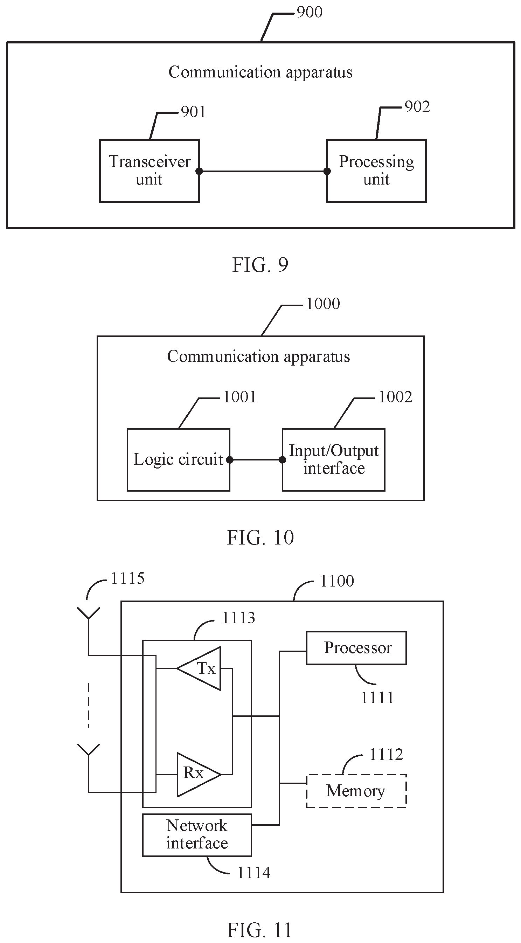

Refer to FIG. 9, this application provides a communication apparatus 900. The apparatus 900 includes a transceiver unit 901 and a processing unit 902.

In an implementation example, the communication apparatus 900 may implement the functions of the first device in the foregoing method, and therefore can also implement the beneficial effects of the foregoing method. In this application, the communication apparatus 900 may be a first device, or may be a software module, an integrated circuit, an element, or the like inside a first device, for example, a chip. This is not limited. The following uses an example in which the communication apparatus 900 is the first device for description.

Specifically, the processing unit 902 is configured to: determine a type of sensing data that needs to be reported, where the sensing data is obtained by executing a sensing task; determine, when the type of the sensing data is a first type, a parameter included in first information, where the first information is auxiliary information used for processing the sensing data; and determine the first information based on the parameter included in the first information; and the transceiver unit 901 is configured to report the first information and the sensing data.

In a possible implementation, the processing unit 902 is specifically configured to determine the type of the sensing data based on a first request message received by the transceiver unit 901, where the first request message indicates to execute the sensing task.

In a possible implementation, the type of the sensing data is carried in the first request message; or the first request message carries a requirement of the sensing task, and the processing unit 902 is specifically configured to determine the type of the sensing data based on the requirement of the sensing task and/or sensing capability information, where the sensing capability information includes at least one of sensing resolution, sensing precision, a sensing range, a sensing refresh rate, a false detection rate, and a miss detection rate.

In a possible implementation, the type of the sensing data is carried in the first request message, and the transceiver unit 901 is further configured to report the sensing capability information.

In a possible implementation, the processing unit 902 is specifically configured to: when the first type is a baseband signal, determine that the first information includes at least one of the following parameters: configuration information of a sensing resource, slot information, frame information, timestamp information, and a beam direction.

In a possible implementation, the processing unit 902 is specifically configured to: when the first type is data used to describe a signal feature, determine that the first information includes at least one of the following parameters: slot information, frame information, timestamp information, and a beam direction.

In a possible implementation, the processing unit 902 is specifically configured to: when the first type is data used to describe a feature of a target object, determine that the first information includes at least one of the following parameters: indication information of the target object and timestamp information, where the target object is a sensed object of the sensing task.

In a possible implementation, the transceiver unit 901 is further configured to receive a first constraint, where the first constraint is used to constrain a quantity of target objects included in the sensing data.

In another implementation example, the communication apparatus 900 may implement the functions of the core network element in the foregoing method, and therefore can also implement the beneficial effects of the foregoing method. In this application, the communication apparatus 900 may be a core network element, or may be a software module, an integrated circuit, an element, or the like in a core network element, for example, a chip. This is not limited. The following uses an example in which the communication apparatus 900 is the core network element for description.

Specifically, the transceiver unit 901 is configured to receive first information and sensing data, where the sensing data is obtained by executing a sensing task, and the first information is auxiliary information used for processing the sensing data; and the processing unit 902 is configured to: determine, when a type of the sensing data is a first type, a parameter included in the first information; and process the sensing data based on the first information.

In a possible implementation, the transceiver unit 901 is further configured to send a first request message, where the first request message indicates to execute the sensing task.

In a possible implementation, the transceiver unit 901 is further configured to receive sensing capability information, where the sensing capability information includes at least one of sensing resolution, sensing precision, a sensing range, a sensing refresh rate, a false detection rate, and a miss detection rate; and the processing unit 902 is invoked to determine the type of the sensing data based on the sensing capability information and/or a requirement of the sensing task.

In a possible implementation, the first request message carries the requirement of the sensing task.

In a possible implementation, the processing unit 902 is specifically configured to: when the first type is a baseband signal, determine that the first information includes at least one of the following parameters: configuration information of a sensing resource, slot information, frame information, timestamp information, and a beam direction.

In a possible implementation, the processing unit 902 is specifically configured to: when the first type is data used to describe a signal feature, determine that the first information includes at least one of the following parameters: slot information, frame information, timestamp information, and a beam direction.

In a possible implementation, the processing unit 902 is specifically configured to: when the first type is data used to describe a feature of a target object, determine that the first information includes at least one of the following parameters: indication information of the target object and timestamp information, where the target object is a sensed object of the sensing task.

In a possible implementation, the transceiver unit 901 is further configured to send a first constraint, where the first constraint is used to constrain a quantity of target objects included in the sensing data.

In a possible implementation, the processing unit 902 is invoked to adjust the first constraint based on the quantity of the target objects included in the sensing data, to obtain a second constraint; and send the second constraint.

It should be noted that for content such as an information execution process of the units in the communication apparatus 900, specifically refer to the descriptions of the foregoing method in this application. Details are not described herein again.

FIG. 10 is another diagram of a structure of communication apparatus 1000 according to this application. The communication apparatus 1000 includes at least a logic circuit 1001. The communication apparatus 1000 may be a chip or an integrated circuit.

Optionally, the communication apparatus further includes an input/output interface 1002.

The transceiver unit 901 shown in FIG. 9 may be a communication interface. The communication interface may be the input/output interface 1002 in FIG. 10, and the input/output interface 1002 may include an input interface and an output interface. Alternatively, the communication interface may be a transceiver circuit, and the transceiver circuit may include an input interface circuit and an output interface circuit.

Optionally, the logic circuit 1001 is configured to: determine a type of sensing data that needs to be reported, where the sensing data is obtained by executing a sensing task; determine, when the type of the sensing data is a first type, a parameter included in first information, where the first information is auxiliary information used for processing the sensing data; and determine the first information based on the parameter included in the first information; and the input/output interface 1002 is configured to report the first information and the sensing data. It should be understood that the logic circuit 1001 and the input/output interface 1002 may further perform other steps performed by the first device in any one of the foregoing examples, and implement corresponding beneficial effects. Details are not described herein again.

Optionally, the input/output interface 1002 is configured to receive first information and sensing data, where the sensing data is obtained by executing a sensing task, and the first information is auxiliary information used for processing the sensing data; and the logic circuit 1001 is configured to: determine, when a type of the sensing data is a first type, a parameter included in the first information; and process the sensing data based on the first information. It should be understood that the logic circuit 1001 and the input/output interface 1002 may further perform other steps performed by the core network element in any one of the foregoing examples, and implement corresponding beneficial effects. Details are not described herein again.

In a possible implementation, the processing unit 902 shown in FIG. 9 may be the logic circuit 1001 in FIG. 10.

Optionally, the logic circuit 1001 may be a processing apparatus, and a part or all of functions of the processing apparatus may be implemented by software. The part or all of the functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller (microcontroller unit, MCU), a programmable logic device (programmable logic device, PLD), or another integrated chip, or any combination of the foregoing chips or processors.

FIG. 11 is a diagram of a structure of a communication apparatus 1100 in the foregoing examples according to this application. The communication apparatus 1100 may be specifically a communication apparatus used as a first device or a core network element in the foregoing examples. For a structure of the communication apparatus, refer to the structure shown in FIG. 11.

The communication apparatus 1100 includes at least one processor 1111 and at least one network interface 1114.

Further optionally, the communication apparatus further includes at least one memory 1112, at least one transceiver 1113, and one or more antennas 1115. The processor 1111, the memory 1112, the transceiver 1113, and the network interface 1114 are connected, for example, connected via a bus. In this application, the connection may include various types of interfaces, transmission lines, buses, or the like. This is not limited in this application. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The processor 1111 is mainly configured to: process a communication protocol and communication data, control the entire communication apparatus, execute a software program, and process data of the software program, for example, is configured to support the communication apparatus in performing the actions described in the foregoing implementation processes. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1111 in FIG. 11. A person skilled in the art can understand that the baseband processor and the central processing unit may alternatively be processors independent of each other, and are interconnected through a technology like a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 and the processor 1111 may be integrated together, for example, integrated into one chip. The memory 1112 can store program code for executing the technical solutions in embodiments of this application, and the processor 1111 controls the execution. Various types of executed computer program code may also be considered as a driver of the processor 1111.

FIG. 11 shows only one memory and one processor. In an actual network device, there may be a plurality of processors and a plurality of memories. The memory may also be referred to as a storage medium, a storage device, or the like. The memory may be a storage element located on a same chip as the processor, that is, an on-chip storage element, or an independent storage element. This is not limited in this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to receive the radio frequency signal from the antenna, convert the radio frequency signal into a digital baseband signal or a digital intermediate frequency signal, and provide the digital baseband signal or the digital intermediate frequency signal for the processor 1111, so that the processor 1111 further processes the digital baseband signal or the digital intermediate frequency signal, for example, performs demodulation and decoding. In addition, the transmitter Tx of the transceiver 1113 is further configured to receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down frequency mixing and analog-to-digital conversion on the radio frequency signal to obtain the digital baseband signal or the digital intermediate frequency signal. An order of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 1113 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

It should be noted that the communication apparatus 1100 shown in FIG. 11 may be specifically configured to implement the steps implemented by the first device or the core network element in the foregoing method, and implement technical effects corresponding to the first device or the core network element. For specific implementations of the communication apparatus 1100 shown in FIG. 11, refer to the descriptions in the foregoing method. Details are not described herein again.

In this application, module division is an example, and is merely logic function division. In actual implementation, another division manner may be used. In addition, functional modules in this application may be integrated into one processor, or may exist alone physically, or two or more modules may be integrated into one module. The integrated module may be implemented in a form of hardware, or may be implemented in a form of a software functional module.

All or a part of the technical solutions provided in this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A data reporting method, wherein the method comprises:
determining a type of sensing data that needs to be reported, wherein the sensing data is obtained by executing a sensing task;
determining, when the type of the sensing data is a first type, a parameter comprised in first information, wherein the first information is auxiliary information used for processing the sensing data;
determining the first information based on the parameter comprised in the first information; and
reporting the first information and the sensing data.

2. The data reporting method according to claim 1, wherein determining the type of the sensing data that needs to be reported comprises:
determining the type of the sensing data based on a received first request message, wherein the first request message indicates to execute the sensing task.

3. The data reporting method according to claim 2, wherein
the type of the sensing data is carried in the first request message; or
the first request message carries a requirement of the sensing task, and determining the type of the sensing data based on the received first request message comprises:
determining the type of the sensing data based on the requirement of the sensing task and/or sensing capability information, wherein the sensing capability information comprises at least one of sensing resolution, sensing precision, a sensing range, a sensing refresh rate, a false detection rate, and a miss detection rate.

4. The data reporting method according to claim 3, wherein the type of the sensing data is carried in the first request message, and before determining the type of the sensing data based on the received first request message, the method further comprises:
reporting the sensing capability information.

5. The data reporting method according to any one of claims 1 to 4, wherein determining, when the type of the sensing data is the first type, the parameter comprised in the first information comprises:
when the first type is a baseband signal, determining that the first information comprises at least one of the following parameters: configuration information of a sensing resource, slot information, frame information, timestamp information, and a beam direction.

6. The data reporting method according to any one of claims 1 to 4, wherein determining, when the type of the sensing data is the first type, the parameter comprised in the first information comprises:
when the first type is data used to describe a signal feature, determining that the first information comprises at least one of the following parameters: the slot information, the frame information, the timestamp information, and the beam direction.

7. The data reporting method according to any one of claims 1 to 4, wherein determining, when the type of the sensing data is the first type, the parameter comprised in the first information comprises:
when the first type is data used to describe a feature of a target object, determining that the first information comprises at least one of the following parameters: indication information of the target object and the timestamp information, wherein the target object is a sensed object of the sensing task.

8. The data reporting method according to claim 7, wherein before reporting the first information and the sensing data, the method further comprises:
receiving a first constraint, wherein the first constraint is used to constrain a quantity of target objects comprised in the sensing data.

9. A data receiving method, wherein the method comprises:
receiving first information and sensing data, wherein the sensing data is obtained by executing a sensing task, and the first information is auxiliary information used for processing the sensing data;
determining, when a type of the sensing data is a first type, a parameter comprised in the first information; and
processing the sensing data based on the first information.

10. The data receiving method according to claim 9, wherein before receiving the first information and the sensing data, the method further comprises:
sending a first request message, wherein the first request message indicates to execute the sensing task.

11. The data receiving method according to claim 10, wherein the first request message carries the type of the sensing data, and before sending the first request message, the method further comprises:
receiving sensing capability information, wherein the sensing capability information comprises at least one of sensing resolution, sensing precision, a sensing range, a sensing refresh rate, a false detection rate, and a miss detection rate; and
determining the parameter comprised in the first information comprises:
determining the type of the sensing data based on the sensing capability information and/or a requirement of the sensing task.

12. The data receiving method according to claim 10, wherein the first request message carries a requirement of the sensing task.

13. The data receiving method according to any one of claims 9 to 12, wherein determining, when the type of the sensing data is the first type, the parameter comprised in the first information comprises:
when the first type is a baseband signal, determining that the first information comprises at least one of the following parameters: configuration information of a sensing resource, slot information, frame information, timestamp information, and a beam direction.

14. The data receiving method according to any one of claims 9 to 12, wherein determining, when the type of the sensing data is the first type, the parameter comprised in the first information comprises:
when the first type is data used to describe a signal feature, determining that the first information comprises at least one of the following parameters: the slot information, the frame information, the timestamp information, and the beam direction.

15. The data receiving method according to any one of claims 9 to 12, wherein determining, when the type of the sensing data is the first type, the parameter comprised in the first information comprises:
when the first type is data used to describe a feature of a target object, determining that the first information comprises at least one of the following parameters: indication information of the target object and the timestamp information, wherein the target object is a sensed object of the sensing task.

16. The data receiving method according to claim 15, wherein before receiving the first information and the sensing data, the method further comprises:
sending a first constraint, wherein the first constraint is used to constrain a quantity of target objects comprised in the sensing data.

17. The data receiving method according to claim 16, wherein after receiving the first information and the sensing data, the method further comprises:
adjusting the first constraint based on the quantity of the target objects comprised in the sensing data, to obtain a second constraint; and
sending the second constraint.

18. A communication apparatus, comprising a transceiver unit and a processing unit;
the processing unit is configured to: determine a type of sensing data that needs to be reported, wherein the sensing data is obtained by executing a sensing task; determine, when the type of the sensing data is a first type, a parameter comprised in first information, wherein the first information is auxiliary information used for processing the sensing data; and determine the first information based on the parameter comprised in the first information; and
the transceiver unit is configured to report the first information and the sensing data.

19. The communication apparatus according to claim 18, wherein the processing unit is specifically configured to:
determine the type of the sensing data based on a first request message received by the transceiver unit, wherein the first request message indicates to execute the sensing task.

20. The communication apparatus according to claim 19, wherein
the type of the sensing data is carried in the first request message; or
the first request message carries a requirement of the sensing task, and the processing unit is specifically configured to:
determine the type of the sensing data based on the requirement of the sensing task and/or sensing capability information, wherein the sensing capability information comprises at least one of sensing resolution, sensing precision, a sensing range, a sensing refresh rate, a false detection rate, and a miss detection rate.

21. The communication apparatus according to claim 20, wherein the type of the sensing data is carried in the first request message, and the transceiver unit is further configured to:
report the sensing capability information.

22. The communication apparatus according to any one of claims 18 to 21, wherein the processing unit is specifically configured to:
when the first type is a baseband signal, determine that the first information comprises at least one of the following parameters: configuration information of a sensing resource, slot information, frame information, timestamp information, and a beam direction.

23. The communication apparatus according to any one of claims 18 to 21, wherein the processing unit is specifically configured to:
when the first type is data used to describe a signal feature, determine that the first information comprises at least one of the following parameters: the slot information, the frame information, the timestamp information, and the beam direction.

24. The communication apparatus according to any one of claims 18 to 21, wherein the processing unit is specifically configured to:
when the first type is data used to describe a feature of a target object, determine that the first information comprises at least one of the following parameters: indication information of the target object and the timestamp information, wherein the target object is a sensed object of the sensing task.

25. The communication apparatus according to claim 24, wherein the transceiver unit is further configured to:
receive a first constraint, wherein the first constraint is used to constrain a quantity of target objects comprised in the sensing data.

26. A communication apparatus, comprising a transceiver unit and a processing unit;
the transceiver unit is configured to receive first information and sensing data, wherein the sensing data is obtained by executing a sensing task, and the first information is auxiliary information used for processing the sensing data; and
the processing unit is configured to: determine, when a type of the sensing data is a first type, a parameter comprised in the first information; and process the sensing data based on the first information.

27. The communication apparatus according to claim 26, wherein the transceiver unit is further configured to:
send a first request message, wherein the first request message indicates to execute the sensing task.

28. The communication apparatus according to claim 27, wherein the first request message carries the type of the sensing data, and the transceiver unit is further configured to:
receive sensing capability information, wherein the sensing capability information comprises at least one of sensing resolution, sensing precision, a sensing range, a sensing refresh rate, a false detection rate, and a miss detection rate; and
determine, by invoking the processing unit, the type of the sensing data based on the sensing capability information and/or a requirement of the sensing task.

29. The communication apparatus according to claim 28, wherein the first request message carries the requirement of the sensing task.

30. The communication apparatus according to any one of claims 26 to 29, wherein the processing unit is specifically configured to:
when the first type is a baseband signal, determine that the first information comprises at least one of the following parameters: configuration information of a sensing resource, slot information, frame information, timestamp information, and a beam direction.

31. The communication apparatus according to any one of claims 26 to 29, wherein the processing unit is specifically configured to:
when the first type is data used to describe a signal feature, determine that the first information comprises at least one of the following parameters: the slot information, the frame information, the timestamp information, and the beam direction.

32. The communication apparatus according to any one of claims 26 to 29, wherein the processing unit is specifically configured to:
when the first type is data used to describe a feature of a target object, determine that the first information comprises at least one of the following parameters: indication information of the target object and the timestamp information, wherein the target object is a sensed object of the sensing task.

33. The communication apparatus according to claim 32, wherein the transceiver unit is further configured to:
send a first constraint, wherein the first constraint is used to constrain a quantity of target objects comprised in the sensing data.

34. The communication apparatus according to claim 33, wherein the transceiver unit is further configured to:
invoke the processing unit to adjust the first constraint based on the quantity of the target objects comprised in the sensing data, to obtain a second constraint; and
send the second constraint.

35. A communication apparatus, comprising a processor, wherein
the processor is configured to execute a program, so that the communication apparatus performs the method according to any one of claims 1 to 8, or the communication apparatus performs the method according to any one of claims 9 to 17.

36. A communication system, wherein
the communication system comprises the communication apparatus according to claim 18 and the communication apparatus according to claim 26.

37. A computer-readable storage medium, comprising instructions, wherein when the instructions are run on a computer, the computer performs the method according to any one of claims 1 to 8, or the computer performs the method according to any one of claims 9 to 17.

38. A computer program product comprising instructions, wherein when the computer program product runs on a computer, the computer performs the method according to any one of claims 1 to 8, or the computer performs the method according to any one of claims 9 to 17.
